(19) Europäisches Patentamt
European Patent Office
Office européen des brevets

(11) Numéro de publication: **0 020 231**
**A1**

## (12) DEMANDE DE BREVET EUROPEEN

(21) Numéro de dépôt: **80400686.4**

(51) Int. Cl.³: **C 05 F 1/00**

(22) Date de dépôt: **16.05.80**

(30) Priorité: **16.05.79 FR 7912397**
**24.07.79 FR 7919047**

(43) Date de publication de la demande: **10.12.80**
**Bulletin 80/25**

(84) Etats contractants désignés: **BE CH DE GB IT LI LU NL SE**

(71) Demandeur: **Balsse, Christian, 623 Chemin de la Planette Aussone, F-31700 Blagnac (FR)**
Demandeur: **Doux, Camille, Chemin de Papou Beauzelle, F-31700 Blagnac (FR)**
Demandeur: **Tastet, Jean, 5 Allée des Sapins, F-33700 Merignac (FR)**

(72) Inventeur: **Balsse, Christian, 623 Chemin de la Planette Aussone, F-31700 Blagnac (FR)**
Inventeur: **Doux, Camille, Chemin de Papou Beauzelle, F-31700 Blagnac (FR)**
Inventeur: **Tastet, Jean, 5 Allée des Sapins, F-33700 Merignac (FR)**

(74) Mandataire: **Chenard, René, 57 rue de Clichy, F-75009 Paris (FR)**

## (54) Procédé et appareillage d'association par enrobage de produits dans du sang d'animaux avec modification des caractéristiques physiques et biochimiques de celui-ci, produits industriels obtenus et applications dérivées.

(57) Procédé d'association par enrobage de produits dans du sang d'animaux avec modification des caractéristiques physiques et bio-chimiques de celui-ci, produits industriels obtenus et applications dérivées.

Le procédé consiste à incorporer au sang liquide, plasma ou sérum, le dit produit à chauffer le mélange jusqu'au voisinage de la température d'ébullition, sous agitation lente et continue, puis à arrêter l'opération lorsque le sang, plasma ou sérum a acquis une consistance grumeleuse, chaque particules du produit incorporé étant alors homogénéisée avec lui par enrobage sous une pellicule continue qui adhère faiblement aux particules enrobées adjacentes.

Le sang anticoagulé et préalablement préchauffé p.ex. sur un réchauffeur à plaques (1) dans lequel il est introduit en (2), est déversé par l'orifice (3) dans un bac (20) dans lequel plonge l'entrémité inférieure d'un organe cylindrique (21) à l'intérieur duquel une vis d'Archimède (22) est entrainée en rotation par un moyen convenable (33).

De préférence on ajoute au sang, dès la saignée, un agent anticoagulant tel que l'EDTA Na2.

Le produit grumeleux enrobé obtenu peut être utilisé pour l'alimentation animale ou dans le cadre des propriétés spécifiques du produit enrobé.

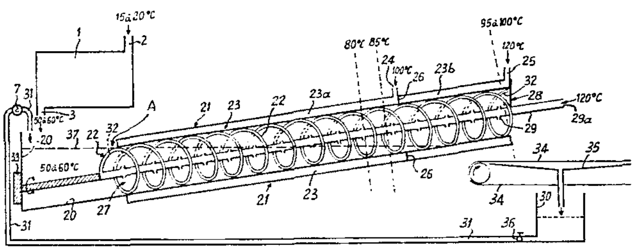

EP 0 020 231 A1

0020231

TITRE MODIFIÉ
voir page de garde



Procédé d'association par enrobage de produits dans du sang d'animaux avec modification des caractéristiques physiques et bio-chimiques de celui-ci, produits industriels obtenus et applications dérivées.

L'invention concerne un procédé de transformation du sang d'abattoir en vue de la fabrication de nouveaux produits au prix d'une faible dépense énergétique.

Il est connu que la majeure partie du sang provenant de l'abattage industriel des animaux de boucherie n'est pas récupérée faute d'un moyen économique permettant sa transformation sous une forme qui le rende aisément transportable et qui soit peu coûteux en énergie nécessaire à la transformation. Si l'on tient compte de la récupération qui est pratiquée, notamment en vue de l'alimentation humaine, sur 60% du sang de porc et, pour divers autres usages, sur 30% du sang de bovin pour diverses applications industrielles, la quantité totale de sang qui n'est pas actuellement collectée est, par exemple en France, voisine de cent mille tonnes par an, ce qui représente 70% environ du volume total de sang disponible au niveau des abattoirs.

Le sang ainsi non récupéré industriellement est alors, le plus fréquemment, rejeté avec les eaux usées; or:
- il est polluant et putrescible et, lorsqu'il est effectué, le traitement d'un litre de sang en station d'épuration revient environ à 16 centimes (évaluation faite pour l'année 1977)
- par contre, il est riche en matières nobles et, tout spécialement, en protéines qui sont ainsi perdues voire détruites sans aucun profit.

Il est clair que le bilan de cette opération est totalement négatif, tant sur le plan strictement économique

que sur celui de l'alimentation humaine au niveau duquel le déficit global en protéines est devenu très important, alors que la récupération des protéines contenues dans le sang d'abattoirs est de nature à permettre soit leur recyclage par leur utilisation pour l'alimentation animale ou à titre d'engrais pour l'agriculture, soit éventuellement, leur utilisation directe dans le cadre de l'alimentation humaine.

L'invention concerne un procédé de transformation du sang d'abattoir qui autorise un certain nombre d'applications complètement nouvelles consistant en l'enrobage de produits solides ou liquides en vue de leur utilisation sous cette forme transformée, soit en vue de leur élimination ou de leur récupération à l'issue d'un cycle d'opérations industrielles au sein desquelles ils constituent un effluent liquide ou sous-produits solides à éliminer, isoler et éventuellement récupérer.

En dehors des procédés bien connus d'utilisation directe du sang dans le cadre des industries de la charcuterie (boudin) et de la conserve, les différents traitements envisageables en vue de sa transformation, tels qu'ils sont actuellement connus, font appel aux techniques suivantes:

1- séparation ou concentration en deux phases par un moyen physique ou mécanique

2- conservation par le froid

3- déshydratation

Ces divers traitements nécessitent tous la mise en oeuvre d'un appareillage complexe et onéreux et le recours à une quantité considérable d'énergie. Leurs diverses modalités sont brièvement rappelées ci-dessous avec l'indication de leur coût de revient ci-après donné de façon approximative sous la simple dénomination "coût".

BAD ORIGINAL

Ce coût se rapporte à un litre de sang traité dans le cadre d'un abattage annuel total de l'ordre de 20.000 tonnes de carcasses d'animaux par unité de traitement; ce tonnage correspond approximativement à un 1 000 000 de litres de sang.

Au prix ci-dessous il convient d'ajouter environ 5 centimes par litre de sang traité (hypothèse d'une collecte effectuée par véhicule citerne à partir de cinq abattoirs) dans tous les cas ou la nature même du procédé mis en oeuvre ne suppose pas le traitement du sang sur les lieux mêmes de l'abattage.

a) Séparation centrifuge de sang alimentaire fraichement récolté: coût 5,6 centimes /litre

b) Congélation en pains de sang entier frais:
coût 14,5 centimes/litre

c) Congélation en paillettes de plasma de qualité alimentaire coût 33 centimes /litre

d) Séchage en cuiseur de sang entier frais ou stocké avec phase de stérilisation vers 125°C puis déshydratation sous vide à 45°C
coût 22,4 centimes/litre

e) Séchage en cuiseur avec préconcentration de sang entier frais ou stocké:
coût 18,9 centimes/ litre

f) Séchage par atomisation avec ou sans concentration préalable de sang entier frais ou stocké:
1- coût sans concentration 83,3 centimes /litre
2- coût avec concentration 82,8 centimes /litre

g) Séchage à billes, de sang entier frais ou stocké
coût 54,1 centimes /litre

h) Concentration par ultrafiltration ou par osmose inverse
1- coût de la transformation du plasma en paillettes congelées : 40 centimes /litre
2- coût de la transformation du plasma en poudre:
600 centimes /litre

BAD ORIGINAL

3- coût de la transformation du sang en farine: 300 centimes/litre

La technique connait également les procédés suivants:
i) Procédé Reprocom de coagulation d'un sang stocké par injection de vapeur dans la masse puis passage au filtre rotatif.
j) Déshydratation sur cylindre Hatmaker de sang entier non alimentaire par séchage sur rouleaux rotatifs à 140°C.
k) Stérilisation - déshydratation par micro-ondes de sang alimentaire ou non, par concentration sous vide puis stérilisation et séchage en farine par micro-ondes.

Les coûts de production indiqués ci-dessus tiennent compte de la rémunération et de l'amortissement des frais d'équipement afférents aux matériels de production. Ces frais d'investissement peuvent, pour une unité de traitement telle que définie ci-dessus, représenter de 250 000 francs à 3 000 000 de francs ( tous les coûts ci-dessus s'appliquent à l'année 1977).

En vue de remédier aux inconvénients des procédés connus et tenant, selon le procédé considéré, soit à la nécessité d'effectuer le traitement sur les lieux mêmes de l'abattage, soit à l'importance de la dépense énergétique à mettre en oeuvre, soit à l'importance des capitaux à immobiliser pour la construction des équipements, l'invention concerne un procédé simplifié de modification des caractéristiques physiques et biochimiques du sang d'animaux après abattage ou du sérum de celui-ci après séparation, remarquable en ce qu'il consiste à chauffer le sang avant coagulation, ou son sérum après séparation, jusqu'à une température correspondant sensiblement à son état d'ébullition tout en lui appliquant une agitation lente et continue, puis à arrêter

BAD ORIGINAL

l'opération lorsque le sang, ou le sérum, a acquis une consistance grumeleuse correspondant à une coagulation en l'état, avec disparition sensiblement totale de la phase liquide.

Par ailleurs, en vue de permettre la conservation du sang sur les lieux d'abattage entre ces collectes périodiques, le procédé est également remarquable en ce qu'il consiste à ajouter au sang, dès la saignée, un agent anti-coagulant et de préférence également un agent bactéricide. Il a été constaté expérimentalement que les meilleurs résultats étaient obtenus avec l'utilisation de l'acide éthylène-diamine-tétra-acétique (E D T A) ou de l'un de ses dérivés basiques tels que l'EDTA disodique (EDTA Na2) qui assure une conservation satisfaisante du sang en phase liquide par retard de développement microbien pendant une période d'environ 10 jours, puis de soumettre au traitement thermique défini ci-dessus le sang ainsi conservé.

Il a été constaté que la proportion pondérale d'EDTA Na2 à ajouter au sang dès la saignée pour lui assurer comme il vient d'être dit une bonne conservation en phase liquide pendant une dizaine de jours, était sensiblement de 0,50%, la durée de 10 jours étant considérée comme suffisante pour satisfaire aux conditions d'un ramassage périodique.

Le sang ainsi conservé, puis transporté sur les lieux de traitement est alors chauffé en masse progressivement sous une agitation lente et continue destinée à assurer l'homogénéité du phénomène de transformation sans toutefois éliminer la fibrine qui contient elle-même des protéines qui seraient perdues si l'agitation était trop forte et que cette fibrine venait à se séparer. Le traitement ainsi défini est poursuivi jusqu'au voisinage

BAD ORIGINAL

de la température d'ébullition.

La réaction de transformation en phase grumeleuse débute vers 80 - 85°C et se termine vers 95-100°C, température qui, à la pression normale, correspond à l'entrée en ébullition du sang.Dans les conditions ou ont été menées les expérimentations, un délai de 15 à 20 secondes s'est écoulé entre le début de la réaction et la transformation totale qui est réalisée à la température d'ébullition. A partir de ce moment, il n'est plus nécessaire de maintenir l'apport calorique puisque la transformation totale ou sensiblement totale est alors réalisée.

On constate alors que l'on a obtenu une phase grumeleuse de couleur marron foncé ( analogue à du marc de café, bien que présentant une granulation apparente plus grosse); cette phase grumeleuse est stable, humide et ne tache pas les doigts.

La perte de poids ne dépasse pas 5%, elle est constituée d'une part, par l'évaporation et d'autre part, par la présence d'un léger " rendu" liquide qui ne présente aucun inconvénient car, comme il sera vu plus loin, ce rendu est repris lors du traitement de la "cuvée" suivante sans qu'il y ait accumulation des "rendus" successifs.

Dès après obtention de la phase grumeleuse telle qu'elle vient d'être définie, et afin d'éviter tout début de prolifération bactérienne à l'intérieur de la masse ainsi portée à haute température, le contenu de la cuve de traitement est déversé en couche mince sur une bande transporteuse qui défile à une vitesse appropriée à l'aplomb du point de déversement; la bande est aménagée de manière telle qu'à son extrémité opposée, le sang traité soit revenu sensiblement à la température ambiante.

BAD ORIGINAL

Le sang en phase grumeleuse stable et humide ainsi obtenu peut être stocké soit à l'air libre en vrac, soit dans des sacs en matière plastique, de préférence scéllés; il peut être ainsi conservé avant utilisation pendant une période de plusieurs mois sans qu'aucune prolifération bactérienne ne commence à apparaître.

En effet, il convient de constater qu'un effet de synergie se produit, du point de vue bactéricide, entre l'EDTA Na 2 et le traitement thermique final du procédé qui vient d'être décrit. Cet effet de synergie est mis en évidence par la double constatation suivante:

- en l'absence de traitement thermique la dose de 0,5 % d'EDTA Na 2 assure au sang non coagulé un état de retard de prolifération bactérienne pendant une période d'environ 10 jours au-delà de laquelle la prolifération bactérienne s'élève extrêmement rapidement.
- par ailleurs, si l'on soumet le sang sans addition d'EDTA Na 2 et alors qu'il est encore en grande partie en phase liquide( ce qui suppose alors que le traitement thermique est appliqué immédiatement après la saignée), l'on ne réalise qu'une pasteurisation classique d'effet très limité dans le temps du fait de l'oxydation due à l'air ambiant.

Il a paru intéressant de donner ici une tentative d'explication de cette synergie au retard à la prolifération au niveau de la phase grumeleuse. En effet, celle-ci constitue un milieu humide de nature organique, au sein duquel il se produit donc des modifications ou transformations bio-chimiques internes au contact de l'air ambiant; ces modifications ou transformations déterminent la libération de certains des oligo-éléments contenus dans la phase grumeleuse, au fur et à mesure qu'elle se produit; cependant ces

BAD ORIGINAL

oligo-éléments ne deviennent pas disponibles pour un métabolisme cellulaire qui autoriserait la prolifération bactérienne puisque l'EDTA Na 2 libre va les complexer (chélater), privant ainsi la flore bactérienne des éléments de nature à lui permettre de réaliser ce métabolisme.

Bien entendu, cette hypothèse n'est valable que si l'on suppose que le traitement thermique de mise en phase grumeleuse est appliqué avant que la totalité de l'EDTA Na 2 ait été utilisé à la chélation de la phase liquide.

En effet, la dose minimale d'EDTA susceptible de déterminer le début de l'anticoagulation ainsi que l'a établi l'expérimentation, est de 0,05 % du volume de sang de saignée considéré. A 0,02 ou 0,03 % il n'y a pas de début d'anticoagulation. Par contre aux environs de 0,1%, l'anti-coagulation est totale. Si le traitement thermique est alors appliqué, il reste 0,40% environ d'EDTA, pour assurer pendant la période de plusieurs mois indiquée ci-dessus, le retard à la prolifération dans la phase grumeleuse.

Cependant, il est également possible que le retard à la prolifération soit dû, au moins pour partie, au fait que le motif éthylène (CH2.CH2) dont les propriétés bactéricides sont connues, est présent dans la structure moléculaire de l'EDTA.

Il a été également constaté que l'on obtenait des résultats comparables à ceux exposés ci-dessus lorsque l'on associe 0,45% d'EDTA Na 2 à 0,05% d'EDTA Ca Na2.

Il a été cependant constaté que les résultats étaient nettement moins bons qu'avec l'utilisation du seul EDTA Na 2.

BAD ORIGINAL

Pour la clarté de l'exposé, il est rappelé que les formules développées de l'EDTA Na2et EDTA Ca Na2 sont respectivement:

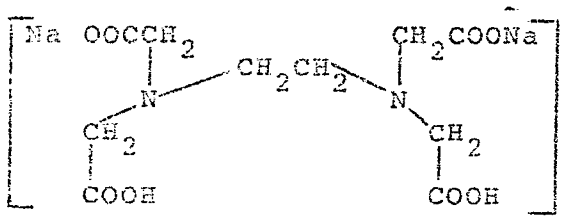 et 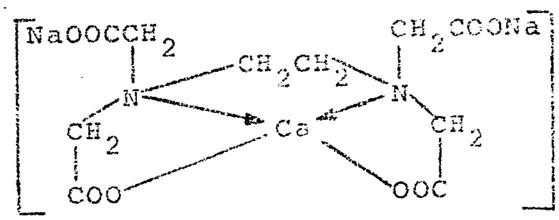

Il a cependant été constaté qu'en vue d'obtenir la conservation du sang en phase liquide avec retard du développement bactérien avant son utilisation, par exemple dans le cadre d'un traitement thermique en vue de sa transformation en phase grumeleuse, si les meilleurs résultats sont effectivement actuellement obtenus avec l'utilisation de l'acide éthylène diamine tétra acétique (EDTA) ou de l'un de ses deux dérivés basiques tels que l'EDTA disodique (EDTA Na2), il était cependant possible de le remplacer par l'un des autres agents complexants (ou chélatants) quelconques actuellement connus, soit sous leur forme acide, soit sous forme de leurs sels. L'on obtient alors des résultats analogues, avec divers degrés de perfection qui, selon l'utilisation envisagée pour le produit final, peuvent être considérés comme suffisants.

Parmi ces autres complexants, l'on peut citer, en sus de l'EDTA et de l'EDTA Na2 mentionnés ci-dessus, tous les autres sels de l'EDTA, tels que les sels d'Aluminium ou de Magnesium, ainsi que les autres complexants connus tels que, notamment:

- l'acide étylène diamino dio hydroxyphényl acétique (EDDHA) ou ses sels
- l'acide nitrilotriacétique ou ses sels
- l'acide 1-2 diamino cyclohexane N,N,N',N' tétra

BAD ORIGINAL

acétique ou ses sels.

Des résultats analogues sont également obtenus en associant un complexant, dérivé ou non de l'EDTA, à un acide, à une base ou à un sel, en raison de l'activation, qui a été expérimentalement constatée, de la chélation par l'adjonction de tel ou tel de ces trois derniers éléments.

Dans le cas où l'on veut réduire la proportion d'EDTA à ajouter, si cela est jugé préférable, par exemple dans le cadre de l'utilisation du sang ainsi traité pour l'alimentation humaine, il est possible de synergiser l'action de l'EDTA alors utilisé à dose réduite (par exemple 0,1%) ou de tout autre complexant par l'adjonction d'un acide, d'une base ou d'un sel. En effet, il a été constaté expérimentalement que ces trois groupes d'éléments constituaient des activateurs de la chélation.

Il est, par exemple, possible d'utiliser du bisulfite de sodium qui présente un certain pouvoir bactéricide et une hydrolyse alcaline, donc avec libération d'ions hydroxydes. En ce qui concerne les acides, on peut également utiliser l'acide citrique qui est connu pour ses propriété anticoagulantes, voire de ses propriétés secondaires d'agent conservateur.

Il est évident que, dans ce cas, le retard à la prolifération bactérienne sera moins bon. Cependant, cela ne présente pas d'inconvénient dès lors qu'il est possible de faire intervenir le traitement thermique dans de très courts délais. Par ailleurs, s'agissant d'une utilisation dans le cadre de l'alimentation humaine, il peut être envisagé de procéder à une stérilisation de la

BAD ORIGINAL

phase grumeleuse obtenue, ainsi que la possibilité en a été mentionnée ci-dessus.

Le procédé qui vient d'être exposé ci-dessus permet de réaliser la récupération intégrale du sang dans tous les abattoirs avec suppression de toutes les nuisances actuellement constatées soit à l'abattoir, soit sur les lieux de traitement. Il permet de supprimer tout rejet liquide par la transformation d'une phase liquide colloïdale en une phase solide grumeleuse microbiologiquement stable qui peut être stockée, puis évacuée a tout moment par exemple avec les matières stercoraires ce qui permet de réduire les taxes de pollution.

Cependant, le produit fini, qui peut être conservé pendant plusieurs mois, est très riche en éléments protéiques car il n'y a qu'une faible dénaturation de tels éléments par rapport au sang de la saignée, du fait du faible apport calorique total nécessaire à la transformation. Il présente donc, dans le cadre des différentes applications industrielles qui seront exposées ci-après,une valeur marchande importante, alors qu'il convient de rappeler que dans l'état actuel des choses, un abattoir doit payer pour qu'on lui collecte le sang.

Par ailleurs, le procédé de traitement défini ci-dessus n'entraine aucun effluent à éliminer et une certaine nuisance olfactive qui apparaît au cours du traitement peut être écartée par l'emploi de charbons activés ou tourbes au-dessus des cuves de traitement.

Par ailleurs,il a également été mis au point un procédé d'enrichissement de la phase grumeleuse en protéines, consistant soit à coaguler, soit à centrifuger un volume supplémentaire de sang liquide, à broyer le

BAD ORIGINAL

caillot ou la masse de globules et plaquettes ainsi obtenu , puis à incorporer le broyat ainsi obtenu au sang anticoagulé et enfin, à soumettre celui-ci au traitement thermique de mise en phase grumeleuse.

Le sérum ou le plasma obtenu après les opérations de coagulation ou de centrifugation sont moins riches en protéines que le caillot ou la masse de plaquettes obtenu. Ils peuvent cependant, être également incorporés à du sang pour mise en phase grumeleuse comme il vient d'être dit; la dite phase grumeleuse résultante est alors relativement pauvre en protéines; elle peut cependant être affectée à l'une des applications décrites au présent brevet.

Il est clair que dans tous les cas le prix de revient est très faible, puisque, d'une part, les cuves de traitement thermique constituent un matériel simple à réaliser du fait que le traitement a lieu à l'air libre sans qu'aucune précaution spéciale n'ait a être prise et que, d'autre part, le coût d'exploitation est, en dehors des frais de transport, essentiellement constitué par celui de l'énergie thermique à mettre en oeuvre pour simplement porter le sang à son point d'ébullition. Cette énergie thermique peut être estimée à 72 000 kilo-calories pour 1 000 litres de sang alors que dans l'exemple des traitements actuels classiques en autocuiseur exposés ci-dessus, la dépense énergétique est de l'ordre de 880 000 kilo-calories pour 1 000 litres de sang, c'est-à-dire que, par rapport à ce procédé, l'économie d'énergie réalisée est de l'ordre de 90%. L'on réalise donc ainsi une dépollution au moindre coût.

Dans la description qui va suivre, il sera donné un exemple de transformation du sang en phase grumeleuse faisant appel à un cycle continu d'opérations à partir

BAD ORIGINAL

de l'apport de sang en phase liquide, anticoagulé comme il a été dit ci-dessus.

Le sang ainsi stabilisé par mise en phase grumeleuse selon le procédé décrit ci-dessus perd son caractère de résidu polluant et peut être utilisé directement pour l'alimentation des animaux en raison de l'appétence du coagulat obtenu. C'est ainsi par exemple qu'il peut intervenir dans le cadre de l'alimentation d'engraissement des porcs sur la base de 25 à 30% de la ration journalière à un taux d'humidité globale d'environ 15%.

Il peut également être envisagé comme adjuvant dans le cadre de l'alimentation humaine. Il doit être précisé à ce sujet que la phase grumeleuse stable et humide obtenue selon le procédé peut éventuellement être portée à 120°C en autoclave. Une opération menée dans ces conditions pendant 20 minutes a établi que le sang ainsi traité conservait le même aspect que le produit de départ.

Par ailleurs, il a été constaté, de façon surprenante, qu'au cours de l'opération ci-dessus décrite de mise en phase grumeleuse qui peut être définie comme une coagulation d'un type particulier, il était possible d'enrober dans les éléments de ladite phase grumeleuse, aussi bien des substances minérales ou organiques en phase liquide ou solide par simple introduction des dites substances dans la cuve de traitement au cours de l'opération de coagulation et avant que ladite coagulation ou mise en phase grumeleuse ait commencé à se produire.

Il est aussi possible de faire absorber, ou tout au moins purifier par des sciures, des tourbes ou tout autre adsorbant, les effluents chargés de l'abattoir

BAD ORIGINAL

ou de toute autre industrie agro-alimentaire. On incorpore au sang puis on coagule l'ensemble en phase grumeleuse comme il a été exposé ci-dessus. L'on peut de cette manière, par exemple au niveau de l'abattoir, enrober les matières stercoraires et les fumiers préalablement broyés. Dans tous ces cas, l'on obtient des substances à grande valeur fertilisante.

Dans le domaine industriel, on peut par le même procédé, fixer sur un adsorbant une phase liquide chargée de métaux lourds ou de produits nocifs pour l'environnement, et coaguler l'ensemble avec le sang. On obtient ainsi un produit organique qui, après un simple séchage à l'air libre, est susceptible de brûler seul dans un four. On peut donc ainsi fixer une pollution et réduire son volume. On peut même envisager, dans ce dernier cas, le recyclage des métaux rares à partir des cendres où ils sont concentrés.

On peut également soumettre le résidu à un traitement connu de séparation de ses éléments constitutifs.

Par incorporation au sang, de fumiers broyés, de boues de station d'épuration, de sciures, de tourbes, de sables, de terres franches, de terreaux, d'argiles gonflantes, de minéraux expansés, de matières humiques et d'engrais on peut obtenir soit des engrais organiques, soit des amendements organiques, soit des substrats horticoles. Le prix de revient de ces produits est intéressant puisqu'il élimine les opérations industrielles coûteuses de broyage et de formulation granulée.

A titre d'exemple concrèt, lorsque l'on veut confectionner un engrais, avant de soumettre au traitement thermique décrit ci-dessus, le sang, qui contient de l'azote, on ajoute de l'acide phosphorique et de la potasse tous

BAD ORIGINAL

deux sous forme pulvérulente, on procède ensuite au traitement thermique sous agitation lente et l'on arrête l'apport calorique dès ébullition du sang. On a ainsi réalisé un engrais naturel complet qui se présente sous forme de sang en phase grumeleuse tel qu'il a été défini ci-dessus et au sein duquel ont été enrobées lors de la cuisson les particules d'acide phosphorique et de potasse.

Il est à noter que le mode opératoire serait identique si l'élément à incorporer au sang se présentait sous forme d'un liquide.

Ces divers produits, de couleur marron foncé et à texture grumeleuse, épandus à la surface du sol jouent d'abord un rôle physique de première importance par une libération retardée des éléments fertilisants, une plus grande surface d'adsorption et une plus grande porosité et en augmentant le pouvoir calorifique du sol et en protégeant ce dernier contre l'évaporation excessive et contre les méfaits des fortes pluies. Enfin en libérant progressivement les principes fertilisants par altération biologique normale, notamment du sang d'enrobage, ils jouent leur rôle chimique de substances fertilisantes.

Le sérum ou le plasma ont, comme le sang, la propriété de coaguler à la chaleur, d'enrober et de lier au cours de ce phénomène toute substance divisée, broyée ou pulvérulente. Tout résidu aqueux peut même disparaître si on introduit un adsorbant comme la sciure et la tourbe.

Donc toutes les applications que nous venons de voir pour le sang, soit dans un but de dépollution, soit dans un but de production d'un substrat fertilisant, peuvent aussi s'appliquer au sérum ou plasma.

BAD ORIGINAL

L'agitation nécessaire pendant la coagulation permet de réaliser une dispersion homogène, dans cette importante masse, de toute substance que l'on doit utiliser en faible quantité.

On peut ainsi envisager la formulation de microgranulés et granulés, vecteurs de produits phytosanitaires, enrobés dans le sang, alourdis le cas échéant par des poudres métalliques pour éliminer, ou tout au moins diminuer, la dérive au vent et aux eaux de ruissellement. La bonne stabilité du coagulat, qui enrobe la drogue et la protège, en fait une "formulation de position", un " produit d'attente".

Le coagulat du sang seul étant appétant pour les animaux, même après autoclavage prolongé si cela est jugé utile ( 4 h. à 120°C par exemple), on peut donc enrober dans le coagulat de sang selon le procédé, des farines alimentaires, de la paille broyée, des poudres d'os, des condiments minéraux etc.

Le sang est alors à la base d'aliments pour le bétail, les animaux domestiques et les animaux sauvages.

Ce coagulat appétant peut aussi servir de support pour faciliter l'ingestion, par les animaux, de produits médicamenteux.

Il peut être à la base d'appâts pour poissons, pour rats et nématodes après incorporation dans ces deux derniers cas de substances raticides et nématicides enrobés dans le coagulat de sang par le même procédé.

La présente invention a aussi pour objet de préciser qu'il est possible de procéder à la dessication du sang

BAD ORIGINAL

préalablement transformé en phase grumeleuse avec enrobage simultané de produits divers, comme il vient d'être dit.

En effet, cette dessication de la phase grumeleuse humide et réalisant l'enrobage d'un produit quelconque conduit à un produit qui est également grumeleux, granulé et qui n'est pas pulvérulent.

La dessication peut être réalisée en soumettant la phase grumeleuse à un traitement thermique ou simplement à l'air libre, avec ou sans ventilation.

Ce nouveau produit desséché, noiratre et grumeleux d'aspect, est très différent du sang desséché ordinaire obtenu par les moyens classiques. En effet, le sang desséché ordinaire se présente sous la forme d'une poudre marron très fine, très pulvérulente, qui peut se compacter malencontreusement dans les trémies de stockage et qui peut également être mise en suspension par le moindre courant d'air.

Il est donc clair que le sang desséché à partir de la phase grumeleuse est différent de la poudre de sang classique sur le plan de la couleur, mais aussi et essentiellement sur le plan de la texture et de la densité apparente.

Les comportements physiques du sang ainsi traité, lors de son utilisation, seront donc différents de ceux du sang desséché selon les procédés classiques, qu'il s'agisse par exemple d'un épandage aux champs ou d'un transit forcé dans une conduite ou un pulvéri-sateur.

BAD ORIGINAL

Il en est de même dans le cas d'une ingestion par les animaux; en effet, l'ingestion de sang en poudre ou en farines, donc de produits pulvérulents, occasionnent des accidents pulmonaires fréquents; or, ce nouveau produit sec et grumeleux élimine ce risque. Il peut être administré seul ou en association à d'autres produits alimentaires de complément.

Le nouvel état conféré au sang par application du procédé ci-dessus a été défini dans une première approche autant qu'il pouvait l'être par la simple observation visuelle. Selon cette définition, le nouveau produit se présente comme une phase grumeleuse de couleur marron foncé, analogue à du marc de café bien que présentant une granulation plus grosse, cette phase grumeleuse étant stable, humide et ne tachant pas les doigts.

En vue de donner à cette définition un caractère plus précis des observations ont été faites à la loupe binoculaire et des macrophotographies ont été faites dans ces conditions. Il a ainsi été constaté que, sous un grossissement de 30 fois environ, la phase grumeleuse se présentait comme un agrégat de nodules plus ou moins isolés, adhérents entre eux, formant ainsi des masses de dimension millimétrique ( approximativement 0,5 mm à 2mm).

Cependant, l'observation attentive de ces nodules de forme quelque peu irrégulière a montré qu'ils étaient eux-mêmes constitués par un agglomérat de granules beaucoup plus petits et d'apparence sphéroïdale.

Bien entendu, ainsi qu'il a été exposé ci-dessus, les particules du corps enrobé sont englobées dans cette phase ou structure grumeleuse au sein de laquelle il est surprenant de constater qu'elles perdent leur indivi-

BAD ORIGINAL

dualité pour former partie intégrante de ladite structure grumeleuse de manière telle que seuls les éléments initiaux de granulométrie relativement importante restent identifiables.

Cependant, malgré cette possibilité d'identification, lesdits éléments restent plus ou moins adhérents entre eux et entre les éléments de sang en structure grumeleuse au sein desquels les plus petites des particules enrobées ne sont plus identifiables visuellement.

Afin de tenter de mettre ce phénomène en relief et d'essayer de déceler la structure du ou des éléments concourrant à l'enrobage, c'est-à-dire à l'agglomération des particules par le sang, il a été procédé à un premier essai avec l'alliage de Dewarda qui est constitué par 50% d'Aluminium, 45% de Cuivre et 5% de Zinc. Cet alliage se présente sous la forme d'une poudre grise très fine dont les particules les plus fines sont de l'ordre du micron tandis que les plus grosses, en petit nombre sont de l'ordre de 100 microns ou plus et présentent des facettes cristallines brillantes.

Les proportions pondérales adoptées ont été:
Alliage de Dewarda : 2 parties /sang : 10 parties
Il sera rendu compte de cet essai aux figures 2 et 3, mais il peut être dès maintenant indiqué que l'observation au microscope optique de la structure d'enrobage ne révèle que la disparition des particules les plus fines noyées au sein de la structure grumeleuse marron foncé tandis que les particules les plus grosses continuaient à présenter des facettes brillantes et semblaient recouvertes d'une fine pellicule parfaitement transparente; toutefois, aucune certitude quant à l'existence de cette pellicule, pas plus qu'à son carac-

BAD ORIGINAL

tère continu ou discontinu ne pouvait être fournie par cet examen optique.

Par ailleurs, les observations effectuées, dans les mêmes conditions, sur du sang coagulé à la chaleur sans agitation lente, ont confirmé le fait, déjà connu; que ce sang coagule alors en une masse homogène assez analogue à ce qui est désigné en matière culinaire comme un " flan"; cette masse qui nécessite un démoulage et qui peut être facilement coupée au couteau, sera ci-après désignée par l'expression "structure flan" par souci de simplification.

Afin de mieux mettre en évidence la nature du phénomène d'enrobage ainsi que les différences entre la structure grumeleuse et la structure flan, on a eu recours à un microscope à balayage de marque JEOL, type J.S.M-U3 assisté d'un système EDAX (Energy Dispersive Analysis of X-Rays), lui-même assisté d'un ordinateur susceptible de traiter les données et de les mettre en mémoire.

Il est ici rappelé que le système EDAX permet ainsi, par simple interrogation par bombardement électronique, sous vide très poussé, d'un échantillon à analyser, d'obtenir instantanément par analyse du spectre énergétique de rayonnement X diffusé de ce fait, la composition, en corps simples, de la couche superficielle de cet échantillon, dans l'ordre de la classification de Mendeleïev en abscisses, par un tracé de symbolisation conventionnelle fournissant, en ordonnées, les proportions relatives des dits corps simples. Le rappel, sur l'écran de visualisation, et selon une symbolisation différente, des caractéristiques d'un précédent échantillon de composition non identique précédemment mises en mémoire, permet de souligner les différences respectives de teneur pour tous les corps simples de la Nature.

BAD ORIGINAL

L'analyse concerne une épaisseur de la partie superficielle de l'échantillon qui peut varier, d'une façon générale, de 0,1 micron à plusieurs microns, selon la tension d'accélération des particules qui est appliquée à l'appareil; la présence d'un corps déterminé se traduit sur l'écran par une sorte de " pic" dont la hauteur est liée à la quantité dudit corps contenue dans le volume analysé de l'échantillon et l'ordinateur permet de calculer la valeur numérique de l'intégrale du pic correspondant.

Il sera compris que les clichés obtenus au microscope électronique à balayage sont de reproduction difficile dans le cadre des procédés graphiques autorisés en matière de brevets d'invention. Il peut cependant être indiqué, que ces clichés réalisés pour chacun des deux échantillons de structure flan et de structure grumeleuse, respectivement aux grossissements x30, x300, x1000 et x5000 et sans déplacement d'échantillon, ont pleinement confirmé les clichés obtenus en macrophotographie.

C'est-à-dire que le sang de structure grumeleuse montre une hétérogranulométrie caractéristique et une structure générale de type " agrégat".

Aucune confusion n'est possible avec la structure flan, coupable au couteau; dans ce dernier cas, et quelque soit le grossissement, il s'agit manifestement d'une structure compacte continue et homogène. Au grossissement x1000, la surface est très faiblement ondulée sans qu'apparaisse aucun début de résolution de cette surface pratiquement uniforme qui correspond en fait à l'aspect de gel de la structure flan, à la seule exception de quelques fissures, en dehors de la

BAD ORIGINAL

partie centrale du cliché effectué, analogues à celles, de plus grande dimension, que l'on peut constater à l'oeil nu sur une telle structure flan ou gel. Par contre, au grossissement x5000 pour lequel seule est concernée une plage exempte de fissure,l'image de surface est pratiquement uniforme.

Il en est tout autrement de l'échantillon de structure grumeleuse pour lequel notamment les clichés à x 1000 et x 5000 font nettement apparaître la granulométrie de la dite structure, parfaitement mesurable et dans laquelle les formations sphéroïdales de sang grumeleux peuvent être appréciées comme présentant un diamètre de l'ordre de 1 à 5 microns.

Une explication peut être donnée de ce phénomène non encore décrit ni mis en application en ce qui concerne les possibilités d'applications industrielles qu'il implique.

En effet, l'état d'agitation lente dans lequel est maintenu le sang dès le début du traitement thermique a pour effet de mettre la matière en un état de division qui, pour que son état d'équilibre thermodynamique soit conservé, engendre des particules sphéroïdales soumises aux lois de la tension interfaciale ou de la tension superficielle qui ne sont que deux aspects d'un même phénomène.

De façon plus précise, la dite matière constituée par le sang, s'organise physiquement en cet état.

Or, le sang contenant des protéines, et tout spécialement le plasma, ces particules coagulent en cet état de division et de façon irréversible sous l'action de la

chaleur à laquelle elles sont soumises dans le même temps.

L'attention doit ici être attirée sur un certain nombre de facteurs qui favorisent et/ou déterminent cette coagulation sous forme de particules sphéroïdales de très faible diamètre. En effet:

- le sang n'est aucunement une solution homogène puisqu'il est constitué par un milieu liquide colloïdal qui contient en suspension les " éléments figurés" du sang, c'est-à-dire des globules de différentes natures tels que les hématies et les leucocytes, de même que des fragments de cellules qui sont les plaquettes sanguines, ces éléments, également de nature colloïdale, étant assimilables à des pseudo-solides par rapport au pseudo-liquide constitué par le plasma. Il est donc normal que l'agitation lente, appliquée, selon l'invention, au sang, favorise la mise de celui-ci en état de division.
- il est connu que les colloïdes constituant les éléments figurés du sang présentent une tension superficielle supérieure à celle du plasma puisque,notamment, ils sont parfaitement " mouillés" par ce dernier, sans, pour autant, lui être miscibles.
- il est également connu que la tension superficielle du sérum du sang, qui n'est autre que du plasma (80 gr. de protéines par litre), qui a perdu son fibrinogène ( 4 gr.par litre) à la suite de la formation du caillot des éléments figurés, est très faible à la température ambiante. Elle est, selon les "Tables scientifiques Documenta GEIGY" ( 6è édition page 654) de 57 à 58 dynes /cm à la température de 16-18°C. En outre, les mêmes tables notent qu'elle s'abaisse à 47 dynes / cm. à la température de 37° C. La mesure de la tension superficielle du plasma, peu différente de celle du sérum en raison de leur teneur très voisine en pro-

BAD ORIGINAL

téines identiques n'a pas été faite dans le cadre de la présente invention qui présente essentiellement un caractère industriel. Sans que l'on ait à formuler une hypothèse sur le profil de la courbe de variation de cette tension superficielle du plasma, en fonction de sa température, il est cependant évident que pour la température voisine de 80°C. pour laquelle on constate, dans les conditions du mode opératoire indiqué, le commencement de la transformation du sang liquide en structure grumeleuse, qu'après que le plasma soit passé de 37°C, à 80°C., la tension superficielle du plasma a atteint une valeur beaucoup plus faible encore.

- ceci explique que l'état de division créé par l'agitation lente du sang donne naissance, selon les lois de la tension superficielle, à des formations sphéroïdales qui, pour la température voisine de 80°C. où se réalise la coagulation des protéines, présentent le diamètre extrêmement petit qui a pu être mesuré sur les clichés obtenus au microscope électronique.

Il doit être précisé que par agitation lente, il faut entendre une agitation qui ne détermine pas, selon un processus connu, la transformation du fibrinogène du sang en fibrine, ce qui aurait pour effet d'encrasser les appareillages de traitement et de déterminer la perte de 4% de la teneur plasmatique en protéines puisque le fibrinogène est lui-même une protéines.

Bien entendu, au cours de la transformation en structure grumeleuse, il se produit un phénomène de collage plus ou moins accusé entre certaines des particules voisines, ce qui explique la formation de nodules de grosseur plus ou moins importante eux-mêmes reliés, pour les mêmes raisons, dans une structure générale de type agrégat.

BAD ORIGINAL

Il doit être toutefois compris que cette structure générale est de cohésion relativement faible ce qui explique que l'ensemble apparait finalement comme une réunion d'agrégats plus ou moins importants, indépendants les uns des autres et qui se comportent sensiblement à la manière d'un marc de café, c'est-à-dire que cet ensemble grumeleux peut être versé, transvasé ou épandu sans la moindre difficulté. Il en est évidemment tout au contraire de la structure flan, qui, après démoulage hors du récipient ou l'on a effectué sa coagulation, nécessiterait au moins un broyage pour parvenir à un résultat quelque peu analogue.

Encore convient-il de souligner que la relative faiblesse de liaison par collage entre les micro-particules sphéroïdales élémentaires de la structure grumeleuse qui vient d'être définie ci-dessus, aboutit à une aptitude très supérieure à la transformation bio-chimique par les agents extérieurs, par exemple lorsque ladite structure est utilisée comme engrais par épandage ou encore à une grande aptitude à la dispersion lorsqu'à titre d'autres exemples elle est utilisée comme adjuvant dans le cadre de la fabrication de pâtes de ciment ou de produits analogues ou de pâtes destinées à être soumises à une cuisson.

Ainsi, les constatations, d'aspects à première vue purement scientifiques, par lesquelles a débuté le présent exposé, se révèlent en fait d'une très grande importance du point de vue industriel, non seulement en ce qui concerne la possibilité ou facilité de manipulation du sang transformé en phase ou structure grumeleuse, qu'en ce qui conserne son comportement en qualité d'agent d'enrobage selon la présente invention et du point de vue de la possibilité des transformations bio-chimiques par lesquelles peut se concrétiser son action ultérieure

BAD ORIGINAL

et également en ce qui concerne la possibilité de sa dispersion dans le cadre de son utilisation comme adjuvant et agent d'enrobage d'engrais, produits phytosanitaires et autres.

En ce qui concerne l'utilisation comme agent d'enrobage et adjuvant d'engrais, il faut remarquer que la coagulation sous forme de particules élémentaires de très faible diamètre favorise la bio-transformation de la structure grumeleuse sans pour autant supprimer complètement un certain effet de retard, notamment en ce qui concerne la libération des particules d'engrais,retard qui est toujours favorable dans de telles utilisations.

En considération du grand intérêt qu'il y a à donner une définition du phénomène de l'enrobage et de la structure résultante, il a été procédé à diverses expérimentations, observations, mesures et calculs dont le compte-rendu sera donné dans le cadre de la description qui va suivre faite en référence aux dessins annexés dans lesquels:
- la figure 1 est une vue schématique d'un appareillage de traitement thermique du sang selon l'invention, faisant appel à un cycle continu d'opérations en vue de l'enrobage d'un produit quelconque.
- les figures 2 et 3, représentent, photographiés au microscope électronique, sous le grossissement x 300, respectivement l'alliage de Dewarda et le même alliage après l'enrobage par le sang transformé en structure grumeleuse selon l'invention.
- les figures 4,5 et 6 représentent, photographiées au microscope électronique, grossissement x 1000, respectivement un échantillon de calcaire pulvérulent sans enrobage ( cliché référencé $IV_A$) un échantillon du même calcaire enrobé dans du sang, puis traité selon le procédé de l'invention ( cliché $I_A$), et un échantillon de même calcaire enrobé puis traité par l'acide chlori-

BAD ORIGINAL

drique à 0,5N.

- les figures 7 à 11, des clichés EDAX centrés sur les "pics" de l'argent et du calcium et montrant en superposition les tracés de réponse suivants:

- fig. 7 (cliché $IV_{B1}$): calcaire seul respectivement analysé sous les tensions de 5 et 7 kilo-volts (kv).

- fig. 8 (cliché $IV_{B2}$): calcaire seul analysé sous les tensions de 7 et 15 kv.

- fig. 9 (cliché $I_{B1}$) : calcaire enrobé analysé sous les tensions de 5 et 7 kv.

- la figure 10 (cliché $I_{C1}$) même échantillon qu'à la figure 9, sous les mêmes tensions de 5 et 7 kv, la visualisation ayant été centrée sur les raies K et L du calcium avec étalement de l'échelle géométrique en abscisse.

- la figure 11 (cliché $I_{C2}$) même échantillon qu'aux figures 9 et 10 sous les tensions de 7 à 15 kv, l'échelle verticale ayant été portée de 1000 à 2500 électrons-volts pour conserver le tracé " 15 kv" ( tracé en pointillé) dans le cadre du cliché.

- la figure 12 ( cliché $III_{B1}$) : le calcaire enrobé par HCl 0,5 N analysé sous les tensions de 5 et 7 kv.

- la figure 13 (cliché $III_{B2}$) : le même calcaire enrobé traité par HCl analysé sous 7 et 15 kv.

- Les figures 14 à 16 des reproductions des résultats de calculs effectués par l'ordinateur pour les clichés d'analyses ( dont tous n'ont pas été représentés) du calcaire ($IV_A$), du calcaire enrobé ($I_A$) et du calcaire enrobé traité par HCl ($III_A$), calculs effectués pour chaque échantillon sous les tensions respectives de 15, 7 et 5 kv.

et les figures 17 à 19, des représentations schématiques de la position de la " poire d'intéraction" du procédé EDAX dans diverses hypothèses examinées.

BAD ORIGINAL

A la figure 1, l'appareillage comporte essentiellement un élévateur à vis d'Archimède disposé en position inclinée, à la partie inférieure duquel est amené le sang liquide préchauffé à environ 60°C.

Ainsi que le montre la figure, l'élévateur est constitué schématiquement de la manière suivante:
Le sang anticoagulé et préalablement préchauffé approximativement à 60°C par exemple sur un réchauffeur à plaques schématisé en 1 dans lequel il est introduit en 2 à une température de 15 à 20°C par exemple, est déversé par l'orifice 3 dans un bac 20 dans lequel plonge l'extrêmité inférieure d'un organe cylindrique 21 à l'intérieur duquel une vis d'Archimède 22 est entrainée en rotation par un moyen convenable 33.

Des moyens de contrôle ,qui n'ont pas été représentés et sont de conception classiques, sont aménagés de manière que le liquide ne dépasse pas un niveau maximum qui est matérialisé en 37 sur la figure.

Le produit à enrober est introduit dans le sang ( ou le plasma ou le sérum), au point A ou en tout autre point du trajet du sang situé en amont du début de la vis d'Archimède. L'introduction est effectuée de toute manière convenable, par exemple par une trémie ou une tubulure comportant, de préférence, une vanne de réglage du débit.

L'organe cylindrique 21 présente deux parois coaxiales déterminant un espace annulaire 23 à l'intérieur duquel peut circuler un fluide porté à température convenable, amené par des orifices d'admission tels que 24, 25 et d'évacuation, non représentés.

L'espace annulaire 23 est en outre, de préférence,

BAD ORIGINAL

divisé radialement par une cloison 26 en deux espaces 23a, 23b, respectivement desservis par les orifices d'entrée 24, 25 de manière à permettre de soumettre le sang à une ambiance thermique de plus en plus élevée au fur et à mesure qu'il va être élevé par la vis d'Archimède de l'orifice d'entrée 27 jusqu'à l'orifice d'évacuation 28 selon une loi de croissance de température qui sera définie ci-après.

De plus, ladite vis d'Archimède présente elle-même une double paroi définissant un volume hélicoïdal 32 à l'intérieur duquel peut circuler un fluide amené à une température de l'ordre de 100 à 110°C et qui y est introduit de toute manière convenable par exemple au niveau de l'extrémité supérieure 29a de son axe creux 29.

Enfin, à l'aplomb de l'orifice 28 est disposée l'une des extrémités d'une bande transporteuse perméable 34 sous laquelle est aménagée une trémie 35 permettant la récupération du léger rendu liquide qui a été mentionné ci-dessus, dans un bac 30 qui est relié au bac de réception 20 par une canalisation convenable 31 munie d'une vanne 36 et de moyens de pompage 7 aménagés de manière à réintégrer ledit rendu au flux de sang liquide déversé dans le bac 20.

Le dispositif fonctionne de la manière suivante:
Lorsque la vis d'Archimède est entrainée en rotation, elle prend en charge et élève à chaque tour de rotation une certaine quantité du sang anticoagulé contenu dans le bac 20, ainsi que le produit à enrober qui y est mêlé et elle achemine l'ensemble, de façon en elle-même bien connu, de l'orifice 27 vers l'orifice 28 et en la maintenant par son mouvement propre, en état d'agitation lente, vers la partie supérieure de l'organe cy-

BAD ORIGINAL

lindrique 21. Au cours de cette progression, le sang contenant le dit produit ( par exemple un engrais pulvérulent ou finement granulé) est soumis à l'action de la chaleur provenant, d'une part, du fluide qui circule dans l'espace 23a, puis 23b et, d'autre part, par simple contact avec la vis elle-même, à l'action de la chaleur du fluide qui circule dans l'espace hélicoïdal 32. Sa température s'élève donc progressivement.

Par ailleurs, ainsi qu'il a été indiqué ci-dessus la réaction de transformation en phase grumeleuse débute aux environs de 80°C et il est souhaitable qu'à partir de cette température la transformation totale du sang en phase grumeleuse soit acquise en un temps très court. En conséquence, il a été jugé préférable d'organiser au voisinage de la partie supérieure de l'organe cylindrique une chambre annulaire 23b séparée de la chambre 23a par la cloison 26; dans la chambre 23b est introduit un fluide à température nettement plus élevée que celui qui est introduit dans la chambre 23a, par exemple au voisinage de 120°C. Il y a lieu de remarquer en outre que la disposition consistant à introduire le fluide à une température du même ordre de grandeur par l'extrémité supérieure del'espace hélicoïdal de la vis d'Archimède répond à la même condition puisqu'il est bien évident que ce fluide perdra ses calories au fur et à mesure de leur échange avec le sang par l'intermédiaire de la paroi de ladite vis d'Archimède avec laquelle celui-ci est en contact, c'est-à-dire au fur et à mesure de sa progression vers l'extrémité inférieure de cette vis au niveau de laquelle il s'échappe par des moyens qui n'ont pas été représentés.

Ainsi , lors de son ascension dans la vis d'Archimède, le sang anticoagulé va être progressivement porté, d'une

BAD ORIGINAL

part aux environsde 80°C ,température pour laquelle commence la réaction de mise en phase grumeleuse, puis à partir de ce moment, et pendant un temps dont la durée peut être déterminée par un choix judicieux de la température d'admission des fluides par les orifices 25 et 29, et/ou par la longueur de la partie 23b de la chambre annulaire 23, jusqu'à la température optimale finale choisie pour ladite mise en phase grumeleuse.

Le sang ainsi transformé en une phase grumeleuse contenant le produit à enrober va donc être déversé au niveau de l'orifice 28, sur l'extrémité du tapis roulant, à partir de laquelle il sera acheminé vers des moyens d'évacuation.

Il est à remarquer que pour une meilleure compréhension, on a indiqué sur la figure 1 les températures du sang selon les zones considérées.

Les clichés des figures 2 et 3 précédemment citées, réalisés sous le grossissement x300 au microscope électronique, montrent respectivement d'une part l'alliage seul, proprement dit, et d'autre part, le même alliage après enrobage dans le sang transformé en structure grumeleuse selon le procédé de l'invention. Quelques cristaux métalliques de dimensions diverses apparaissent noyés au sein de la structure grumeleuse. Cependant, la figure 3 ne peut permettre de définir le phénomène avec plus de précision.

La comparaison des deux clichés précédents ne permettant que de formuler qu'une hypothèse insuffisante quant à la nature de la structure d'enrobage, il a été procédé aux expérimentations plus complètes dont il est rendu compte

BAD ORIGINAL

aux figures 4 à 19.

Il a, en premier lieu, été réalisé un mélange par enrobage comprenant 9/10 de calcaire pulvérulent et 1/10 de sang liquide total stabilisé traité suivant le protocole défini ci-dessus (proportions pondérales).

On remarquera que la proportion de sang a été choisie très faible par rapport au calcaire, en vue de mieux isoler et mettre en relief le phénomène de l'enrobage en lui donnant, en quelque sorte, la prépondérance par rapport à la formation de la structure grumeleuse qui le masquait dans l'exemple précédent.

La poudre obtenue, de texture légèrement humide et grumeleuse, de couleur marron, a été soumise à divers traitementsacides et a été analysée au microscope électronique à balayage JEOL-EDAX défini plus haut.

Les figures 7 à 13 représentent les clichés obtenus à l'aide du dispositif EDAX intégré au microscope électronique utilisé et, bien entendu, sur les mêmes échantillons, clichés sur lesquels ont été superposés, par rappel de mémoire à l'aide de l'ordinateur, les tracés correspondants respectivement à des tensions d'accélération différentes des particules.

Sur la figure 7 par exemple, la ligne du haut est " 79 3690 EV K Z 20 CA". Elle signifie que, pour poser la ligne verticale de repère référencée 101 sur la figure, l'on a choisi la " fenêtre" 79 (caractéristique interne de l'appareil) qui correspond à l'énergie de 3690 électron-volts qui est celle de la raie caractéristique K de l'élément de numéro atomique Z = 20 qui est le calcium (Ca).

BAD ORIGINAL

La seconde ligne indique que l'échelle verticale VS ( Vertical Scale) est de 1000 électron-volts et la mention H S ( Horizontal Scale) signifie que l'appareil différencie deux éléments dont les raies sont distantes de 20 ev par canal (Channel).

La troisième ligne constitue l'indication en abscisse, des énergies qui y sont représentées ( en milliers d'électron-volts).

La quatrième ligne porte de simples indications de service : 22 Avril 1980, tension d'accélération 5 et 7 kv, échantillon 4-EDAX.

On rappellera ci-dessous ( en milliers d'électron-volts) les énergies X émises par les corps suivants sous le bombardement électronique.

| Na | Mg | Al | Si | P | S | Cl | K | Ca |
|---|---|---|---|---|---|---|---|---|
| 1,04 | 1,25 | 1,49 | 1,74 | 2,01 | 2,31 | 2,62 | 3,31 | 3,69 |

Remarque sur le substrat calcaire : Le calcaire pulvérulent utilisé est un échantillon de calcaire couramment utilisé dans les laboratoires pour l'étalonnage des calcimètres BERNARD ( appareil volumétrique qui sert à déterminer le taux de calcaire contenu dans les échantillons de sol ,sable, roche ...etc).

En présence d'acide, même très dilué, le calcaire est attaqué, dissocié, et il y a production de gaz carbonique ($CO_2$) qui se remarque très bien à l'oeil nu et qui peut même se déterminer volumétriquement globalement; ceci se résume par la réaction chimique totale bien connue:

BAD ORIGINAL

$CaCO_3 + 2HCl \longrightarrow CaCl_2 + H_2O + CO_2 \nearrow$

A - Traitement à l'acide de l'enrobé calcaire-sang (9/10 - 1/10) :

- Des échantillons d'enrobé sont mis en contact avec : $HCl_{concentré}$ [11N] ⟶ effervescence immédiate
HCl au 1/2 ⟶ effervescence immédiate
HCl [0,5N] ⟶ pas d'effervescence

La poudre calcaire seule, traitée à HCl, [0,5 N] donne une forte effervescence immédiate.

On conclu de cette expérience que le calcaire traité thermiquement par le sang comme il vient d'être dit, est enrobé, protégé par le sang. Cette protection est même continue puisqu'il n'y a pas de réaction à une attaque acide ( pas de dégagement gazeux). Il est d'ailleurs à constater que cette conclusion est valable quelles que soient les concentrations de l'acide pour laquelle on peut noter une différence de comportement dès lors que pour la même concentration, il y a réaction avec le calcaire non traité et absence de réaction pour le calcaire traité.

Il y a donc enrobage et enrobage continu, puisque,en l'absence de cette continuité, il y aurait attaque du calcaire par l'acide.

B- Analyse des échantillons par microscopie à balayage. Epaisseur de l'enrobage:

L'examen a porté sur trois échantillons référencés :
- IV: Substrat calcaire seul.
- I :Enrobé calcaire - sang (9/10 -1/10).
- III:Enrobé calcaire-sang après action de HCl 0,5N.

BAD ORIGINAL

L'aspect, la morphologie, de ces divers échantillons est indiqué sur les clichés ( effectués au grossissement x1000) :

- $IV_A$ calcaire seul,
- $I_A$ enrobé (calcaire 9/10 - sang 1/10),
- $III_A$ enrobé traité par HCl 0,5N.

Les clichés $I_A$ et $III_A$, comparés à $IV_A$, montrent clairement l'importance des cristallites calcaires toujours décelables ( même aspect général de la préparation, même forme des cristallites).

Ceci nous conduit à penser que si une autre substance a été introduite en faible quantité, elle doit obligatoirement constituer un revêtement souple des cristallites.

Ceci correspond bien aux conditions de travail de l'expérience dont il est rendu compte.

L'analyse chimique superficielle de ces échantillons par le système EDAX va se montrer à présent très riche d'enseignements. Il est connu qu'un échantillon solide soumis à un bombardement électronique émet un rayonnement dont l'énergie globale est la somme des énergies caractéristiques de chaque atome constitutif.

Donc à partir de l'analyse d'un spectre énergétique émis par un échantillon soumis à un bombardement électronique on peut déterminer la nature des éléments constitutifs et avoir une idée précise de leurs proportions relatives.

De plus suivant l'énergie du faisceau incident d'élec-

BAD ORIGINAL

trons, commandée par la tension d'accélération de ces électrons, l'épaisseur de la zone analysée est plus ou moins importante. Le volume ainsi analysé est appelé " poire d'interaction". La forme de cette " poire d'interaction" varie avec le numéro atomique moyen (Z) de la zone analysée. En particulier plus le numéro atomique moyen de la zone analysée est élevé plus la poire d'interaction est aplatie (voir figure 17).

Dans la pratique:

- à 5 KV l'épaisseur de la couche analysée est comprise entre 0,3µ et 0,5µ.
- à 7 KV l'épaisseur de la couche analysée est comprise entre 0,5µ et 1µ.
- à 15 KV l'épaisseur de la couche analysée est supérieure à 1µ.

Dans ces conditions l'analyse du rayonnement émis par les échantillons, à ces trois valeurs de la tension d'accélération, permet de suivre la plus ou moins grande quantité de calcium présente dans la zone analysée.

Si le calcaire est protégé par un film de sang coagulé, la quantité de calcium superficiel présente dans le film doit être très inférieure à celle que l'on obtient avec un échantillon de calcaire brut analysé à la même tension et ne traduire que la quantité de calcium normalement présente dans le sang ou le plasma.

Ceci est très bien illustré par les clichés

$IV_{B1}$ $IV_{B2}$

$I_{B1}$ $I_{C1}$ $I_{C2}$

$III_{B1}$ $III_{B2}$

où l'attention a été volontairement portée sur l'élément Ca ( calcium).

BAD ORIGINAL

Il est évident que pour effectuer des comparaisons quantitatives, la quantité de rayonnement total diffusé doit être la même dans toutes les expériences. En ce qui concerne les présentes mesures, il a été pris comme base de travail 40 000 coups pour l'ensemble de toutes les " fenêtres d'analyse"

C- Analyse des clichés :

Lecliché indice B1 représente les pics des raies K et L de l'argent ( provenant de la métallisation), et les pics des raies K et L du calcium.

Les deux traits blancs verticaux repèrent les positions des raies K et L du calcium.

Les hachures représentent toujours l'analyse sous 7 KV.

Les pointillés sur les clichés B1 représentent l'analyse sous 5 KV.

Les pointillés sur les clichés B2 représentent l'analyse sous 15 KV.

Les clichés indicés C1 et C2 représentent exclusivement les pics des raies K et L du calcium avec étalement de la zone considérée, en abscisse.

De plus, sur les tableaux $IV_D$, $I_D$ et $III_D$ (figures 14 à 16) ont été reproduits les calculs faits sur l'ordinateur et donnant les valeurs numériques des intégrales des pics correspondants aux éléments pour les raies caractéristiques données.

( Dans le cas présent, il s'agit des raies $K_A$ du calcium et $L_A$ de l'argent).

BAD ORIGINAL

Remarque: Il manque le cliché $I_{B2}$, mais les données numériques de $I_D$ qui constituent la traduction chiffrée objective de l'aire des pics suffisent à l'interprétation.

( Cette omission provient simplement d'un oubli de manipulation lors de l'enregistrement photographique des clichés).

D- Cas des clichés $IV_{B1}$ $IV_{B2}$ et du tableau $IV_D$ (fig. 7,8 et 14):

Les hauteurs des pics ou les valeurs de leurs intégrales montrent qu'à mesure que la tension d'accélération croit la quantité de calcium croit et la quantité d'argent décroit.

| | | | |
|---|---|---|---|
| Ainsi pour | : 5 KV | 7 KV | 15 KV |
| on a pour Ca | : 542 | 6427 | 11 844 |
| on a pour Ag | : 5478 | 2273 | 680 |

Donc, à 5KV la zone analysée affecte principalement la métallisation argentée;
à 7 KV la zone analysée affecte la métallisation et le substrat calcaire.

Enfin à 15 KV le pic important du calcium montre que la " poire d'interaction" affecte presque exclusivement le substrat calcaire ($CaCO_3$) très riche en calcium.

Ceci se résume par le schéma de la figure 18.

E- Cas du calcaire enrobé, clichés $I_{B1}$, $I_{C1}$, $I_{C2}$ et tableau $I_D$ (fig. 9,10,11 et 15)

BAD ORIGINAL

| | | | |
|---|---|---|---|
| Pour | : 5 KV | 7 KV | 15 KV |
| on a Ca | : 566 | 4196 | 9925 |
| on a Ag | : 6171 | 5250 | 2612 |

On observe un taux de calcium toujours croissant, mais inférieur en valeur absolue à celui de l'échantillon IV pour les analyses effectuées à 7KV et à 15KV. Cela s'explique par le fait que l'on rencontre une zone moins riche en calcium que le substrat calcaire proprement dit. Il s'agit ici de l'enrobage, constitué de sang coagulé. Par contre le taux d'argent ne décroit pas aussi rapidement que pour l'échantillon IV. Ceci indique que la " poire d'interaction" n'a pas le même forme, elle est plus aplatie et affecte donc un volume d'argent plus important. Il peut être conclu de ce fait que le numéro atomique moyen de la substance enrobante est plus élevé que le numéro atomique moyen du calcaire sous-jacent. Vu la composition du sang en éléments divers, à numéros atomiques élevés, cette conclusion est très plausible.

On peut résumer ceci par le schéma représenté à la figure 19.

F- Cas du calcaire enrobé et attaqué à l'acide; cliché $III_{B1}$, $III_{B2}$, et tableau $III_{D}$ (figures 12,13 et 16)

| | | | |
|---|---|---|---|
| Pour | : 5 KV | 7 KV | 15 KV |
| on a Ca | : 596 | 3396 | 5617 |
| on a Ag | : 5577 | 5877 | 2389 |

L'examen des clichés III relatifs à l'attaque acide diluée montre qu'ils sont très voisins des clichés I précédemment décrits.

Ceci prouve que le traitement acide n'a pas affecté

BAD ORIGINAL

l'échantillon enrobé.

On arrive alors à la conclusion globale qu'il existe effectivement une couche protectrice dont l'épaisseur est comprise entre 0,3 et 0,5 micron et dont le numéro atomique moyen est supérieur à celui du calcaire sous-jacent.

L'on peut ainsi dire que le sang a enrobé de façon continue l'échantillon calcaire sur une épaisseur de l'ordre de 0,5 micron et l'a protégé d'une attaque acide modérée.

La formation de la pellicule d'enrobage, son caractère continu et sa très faible épaisseur s'explique par la faible tension superficielle du sang à la température de 80°C à 100°C. ou s'effectue sa coagulation.

BAD ORIGINAL

REVENDICATIONS

1) Procédé d'association d'un produit ou mélange de produits en phase liquide et/ou solide à du sang d'animaux initialement en phase liquide ou à du plasma ou du sérum de celui-ci après séparation, caractérisé en ce qu'il consiste à incorporer au sang liquide ou au plasma ou au sérum, le dit produit ou mélange de produits en phase liquide et/ou solide, puis à chauffer le mélange ainsi constitué jusqu'à une température correspondant sensiblement à son état d'ébullition, tout en lui appliquant une agitation lente et continue, puis à arrêter l'opération lorsque le sang, plasma ou sérum a acquis une consistance grumeleuse, le ou les produits incorporés étant alors homogénéïsés avec lui par enrobage avec disparition sensiblement totale de la phase liquide.

2) Procédé d'enrobage selon la revendication 1 par du sang d'animaux après abattage, caractérisé en ce qu'il consiste à ajouter au sang, dès la saignée, un agent anticoagulant ou complexant, puis à utiliser ultérieurement le sang, ainsi conservé provisoirement en phase liquide, dans le cadre d'un procédé d'enrobage selon la dite revendication 1.

3) Procédé d'enrobage selon l'une des revendications 1 ou 2, caractérisé en ce qu'il consiste à ajouter au sang, dès la saignée un agent bactéricide et/ou retardateur de la prolifération bactérienne.

4) Procédé d'enrobage selon l'une des revendications 1 à 3, caractérisé en ce que l'on arrête le chauffage dès que la réaction de transformation de phase liquide en phase grumeleuse est terminée.

BAD ORIGINAL

5) Procédé d'enrobage selon l'une des revendications 2 à 4, caractérisé en ce que l'agent anticoagulant et l'agent bactéricide sont, l'un et l'autre, constitués par l'acide éthylène diamine-tétra-acétique (EDTA).

6) Procédé d'enrobage selon l'une des revendications 2 à 4, caractérisé en ce que l'agent anticoagulant et l'agent bactéricide sont l'un et l'autre, constitués par l'un des dérivés basiques de l'EDTA.

7) Procédé d'enrobage selon la revendication 6, caractérisé en ce que le dérivé basique de l'EDTA est constitué au moins partiellement par l'EDTA disodique (EDTA Na2).

8) Procédé d'enrobage selon la revendication 6, caractérisé en ce que le dérivé basique de l'EDTA est constitué au moins partiellement par l'EDTA disodique monocalcique (EDTA CaNA2).

9) Procédé selon les revendications 7 et 8, caractérisé en ce que le dérivé de l'EDTA est constitué par une association d'EDTA Na2 et d'EDTA CaNa2.

10) Procédé d'enrobage selon l'une des revendications 1 à 9, caractérisé en ce qu'immédiatement après acquisition de la consistance grumeleuse, le sang ou sérum traité homogénéisé avec le ou les produits incorporés est soumis à un refroidissement rapide.

11) Procédé d'enrobage selon la revendication 10, caractérisé en ce que le refroidissement est obtenu par déversement de la phase grumeleuse totale ainsi obtenue,sur une bande transporteuse de manière telle qu'elle y soit répandue en couche mince, la longueur

BAD ORIGINAL

de la bande étant telle qu'à son extrémité opposée, le sang traité soit revenu sensiblement à la température ambiante.

12) Produit industriel nouveau caractérisé en ce qu'il est constitué par le sang, plasma ou sérum d'animaux avec incorporation d'un produit ou mélange de produits enrobés conformément aux revendications 1 à 11 et qu'il se présente sous forme d'une phase grumeleuse essentiellement constituée par le sang ou sérum transformé par le traitement thermique selon lesdites revendications, et au sein de laquelle les produits incorporés sont homogénéïsés par enrobage.

13) Produit industriel nouveau selon la revendication 12, caractérisé en ce que l'enrobage est constitué et réalisé par une pellicule continue de sang, plasma ou sérum coagulé par la chaleur, qui englobe totalement chaque particule ou groupe de particules de produit enrobé et adhère faiblement, par collage, aux particules ou groupes de particules enrobées adjacentes ou à certaines d'entre elles.

14) Produit industriel nouveau selon les revendications 12,13, 23 ou 24 caractérisé en ce que le produit incorporé est constitué par des substances en phase liquide et/ou en granulés ou poudre présentant un caractère d'adjuvant et/ou d'appétent et/ou de charge adapté à l'alimentation de l'homme et/ou des animaux.

15) Produit industriel nouveau selon les revendications 12, 13, 23 ou 24 caractérisé en ce que le produit incorporé est constitué par des substances phytosanitaires et/ou tout autre adjuvant adapté à des formulations granulées ou microgranulées à usage agricole ou industriel.

BAD ORIGINAL

16) Produit industriel nouveau selon les revendications 12, 13,23 ou 24 caractérisé en ce que le produit incorporé est constitué par des substances à caractère d'engrais et/ou d'amendement minéral ou organique adaptées à la formulation d'un engrais organique, amendement ou substrat agricole ou horticole équilibré.

17) Produit industriel nouveau selon les revendications 12 ou 13 caractérisé en ce que le produit incorporé est constitué par des effluents liquides et/ou solides provenant d'industries agro-alimentaires adaptés à la constitution de produits alimentaires, engrais organiques ou amendements.

18) Produit industriel nouveau selon les revendications 12 ou 13 caractérisé en ce que le produit incorporé est constitué par des substances médicamenteuses en vue de faciliter son ingestion par les animaux.

19) Produit industriel nouveau selon les revendications 12 ou 13 caractérisé en ce que le produit incorporé est constitué par des résidus industriels en phase liquide et/ou solide chargés de produits inorganiques ou organiques,en vue de leur élimination et/ou récupération.

20) Procédé de récupération d'un produit incorporé dans un produit industriel nouveau selon les revendications 12,13 ou 19 en vue de la récupération dudit produit incorporé ou de l'un de ses composants, caractérisé en ce qu'il consiste à soumettre la phase grumeleuse obtenue selon l'une des revendications 1 à 11 ou 22 à 24 à une dessication thermique ou à l'air libre ou sous ventilation puis, après incinération, à éliminer les cendres et enfin,

BAD ORIGINAL

éventuellement, à soumettre le résidu à un traitement connu de séparation de ses éléments constitutifs.

21) Procédé d'enrobage selon l'une des revendications 1 à 11 ou 22 à 24, caractérisé en ce que, après obtention de la phase grumeleuse, celle-ci est soumise à un traitement complémentaire de stérilisation effectué en autoclave.

22) Procédé selon l'une des revendications 2 à 9 destiné à synergiser l'action d'un agent anticoagulant ou complexant en vue de la conservation du sang en l'état d'anticoagulation, caractérisé en ce que l'on ajoute l'agent anticoagulant ou complexant à un acide, une base ou un sel dans un but d'activation de la chélation.

23) Procédé d'enrichissement du sang transformé en phase grumeleuse selon les revendications 1 à 11, 24 caractérisé en ce qu'il consiste soit à coaguler, soit à centrifuger un volume supplémentaire de ce liquide, à broyer le caillot ou la masse de plaquettes ainsi obtenue, puis à incorporer le broyat ainsi obtenu au sang ainsi coagulé et enfin à soumettre celui-ci au traitement thermique de mise en phase grumeleuse.

24) Procédé selon les revendications 1 à 11 , 22 ou 23, caractérisé en ce qu'il consiste à faire circuler un flux continu dudit sang, initialement en phase liquide, sur un parcours déterminé convenable, à introduire dans le sang, plasma ou sérum avant coagulation en phase grumeleuse le produit à enrober, à déterminer l'élévation progressive de température de l'ensemble le long dudit parcours jusqu'au voisinage de la température d'ébullition, à le maintenir en état d'agitation

BAD ORIGINAL

lente jusqu'à ce qu'il ait atteint ladite température pour laquelle il acquiert une consistance grumeleuse, puis à déterminer son refroidissement rapide jusqu'à ce qu'il soit revenu à la fin dudit parcours, à la température ambiante, et enfin à recueillir le produit ainsi enrobé dans le sang, plasma ou sérum ainsi transformé en phase grumeleuse.

25) Appareillage pour l'application du procédé selon la revendication 24, caractérisé en ce qu'il comporte, d'une première part, un réchauffeur à plaques dans lequel est déversé un flux continu de sang à la température initiale, aménagé de manière à porter progressivement ledit flux au voisinage de 60°C, et comportant un orifice d'évacuation par lequel s'échappe le sang; d'une seconde part, un moyen d'incorporation du produit à enrober au sang, plasma ou sérum avant le début de la transformation en phase grumeleuse, ledit moyen étant éventuellement pourvu de moyens de réglage de débit, d'une troisième part, un bac de réception relié à l' orifice d'évacuation; d'une quatrième part, un organe cylindrique allongé et ouvert à ses deux extrémités, présentant une double paroi, disposé en position inclinée de manière que son extrémité inférieure soit immergée au moins partiellement dans le sang contenu dans le bac de réception, ladite double paroi déterminant sur toute la longueur de l'organe cylindrique, au moins une chambre annulaire pourvue de moyens d'admission et d'évacuation pour un fluide de chauffage; d'une cinquième part, une vis d'Archimède s'étendant à l'intérieur de l'organe cylindrique et sur toute sa longueur, pourvue de moyens d'entrainement en rotation et comportant une double paroi déterminant un espace hélicoïdal muni de moyens d'admission et d'évacuation pour un fluide de chauffage, l'ensemble de l'organe cylindrique et de

BAD ORIGINAL

la vis d'Archimède étant aménagé et la température des fluides de chauffage étant choisie de manière à déterminer l'élévation progressive du sang dans la vis d'Archimède et son élévation convenable en température de manière que sa transformation en phase grumeleuse se réalise au moment ou, par le jeu de ladite vis d'Archimède, il atteint l'extrémité supérieure de l'organe cylindrique d'où il s'échappe par gravité et, enfin; d'une sixième part, une bande transporteuse dont l'une des extrémités est disposée à l'aplomb de ladite extrémité supérieure de l'organe cylindrique de manière à recevoir le sang en phase grumeleuse qui s'en échappe, cette bande étant dimensionnée et aménagée de manière telle que le sang soit revenu sensiblement à la température ambiante au moment où il atteint son extrémité opposée par laquelle il est évacué et recueilli.

26) Appareillage selon la revendication 25, caractérisé en ce que la bande transporteuse est constituée en matière perméable, qu'une trémie de récupération du rendu liquide non incorporé à la phase grumeleuse est aménagée sous la dite bande, ladite trémie étant reliée à un bac de récupération lui-même relié, par une canalisation et des moyens de pompage convenables, au bac de réception du sang en phase liquide de manière que le rendu y soit réintégré.

27) Procédé d'enrobage selon l'une des revendications 1 à 11 ou 22 à 24, du sang préalablement transformé en phase grumeleuse humide, caractérisé en ce qu'il consiste à soumettre ledit sang en phase grumeleuse humide à une dessication thermique et/ou à l'air libre et/ou sous ventilation jusqu'à obtention d'un produit sec, grumeleux et/ou granulé, incluant le produit enrobé.

BAD ORIGINAL

28) Produit industriel nouveau constitué par le sang desséché, caractérisé en ce que, obtenu par dessication du sang en phase grumeleuse humide incluant un produit enrobé selon la revendication 27, il se présente sous forme d'un produit noiratre, grumeleux et/ou granulé de texture et de densité apparente nouvelle et non pulvérulente.

29) - Nouveau produit alimentaire, notamment pour l'alimentation animale par du sang desséché incluant un produit enrobé selon la revendication 28, caractérisé en ce que le dit produit enrobé présente un caractère alimentaire et/ou médicamenteux et que l'ensemble est éventuellement associé à des aliments complémentaires.

BAD ORIGINAL

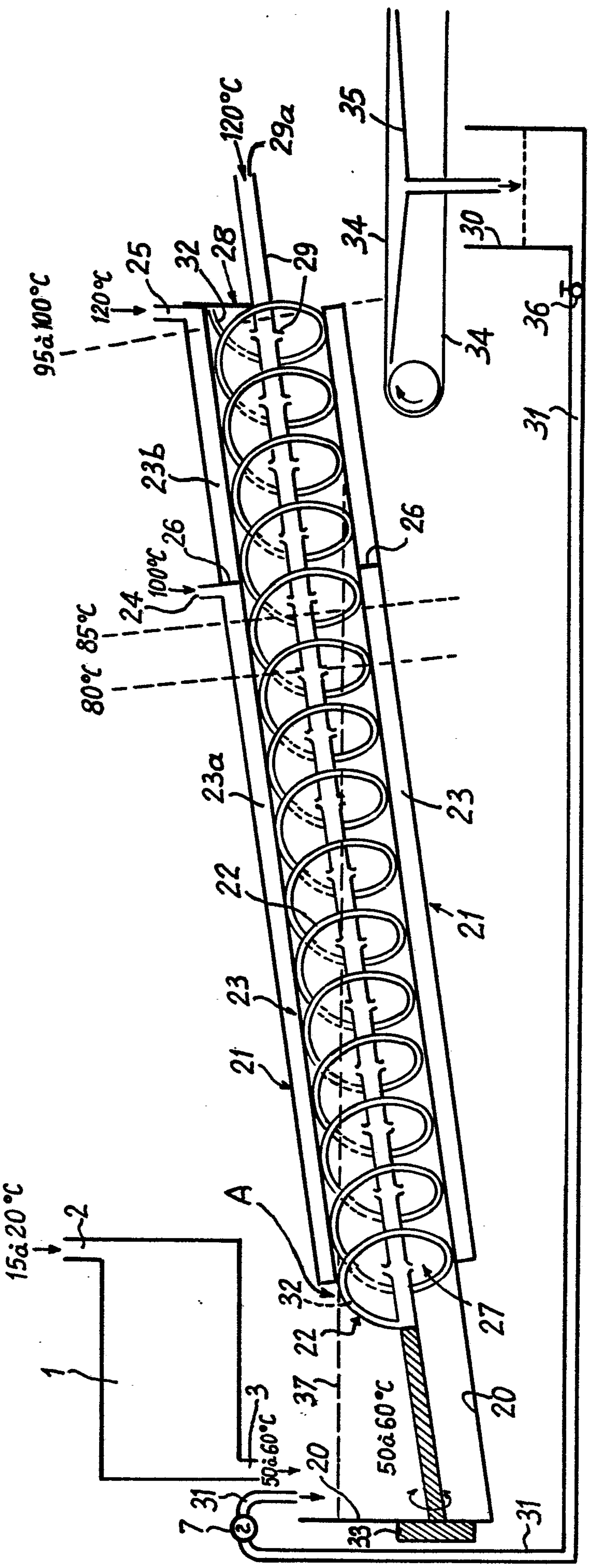
15 à 20 °C
2
1
3
50 à 60°C
20
31
7
33
37
22
32
A
50 à 60 °C
27
21
23
22
23a
23
80°C
85°C
24
100°C
26
23b
95 à 100°C
120°C
25
32
28
29
120°C
29a
35
34
30
36
31


Fig.1

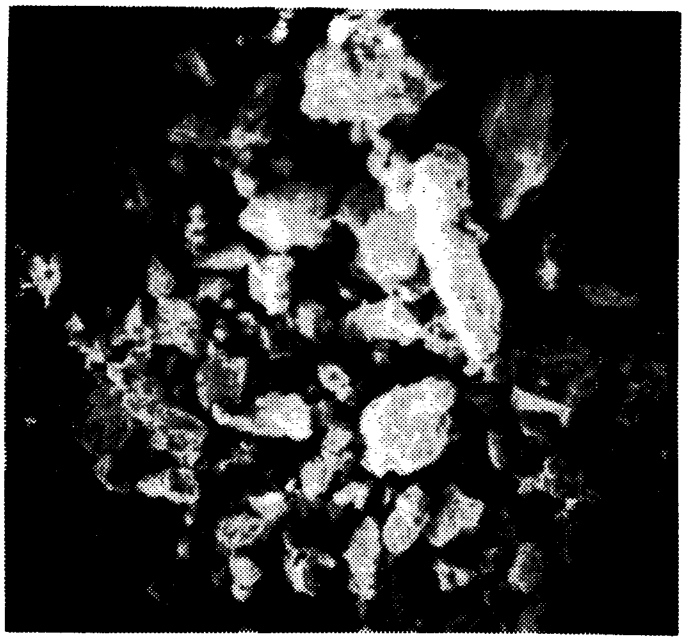

FIG. 2

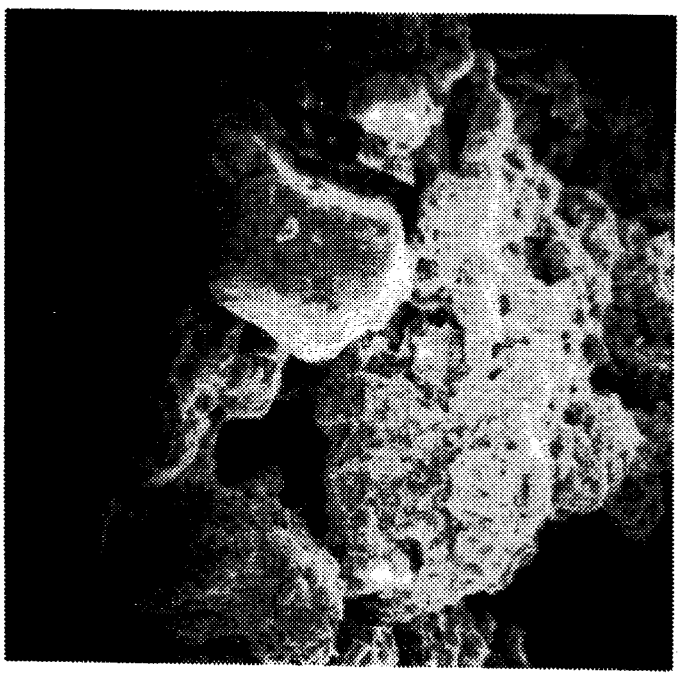

FIG. 3

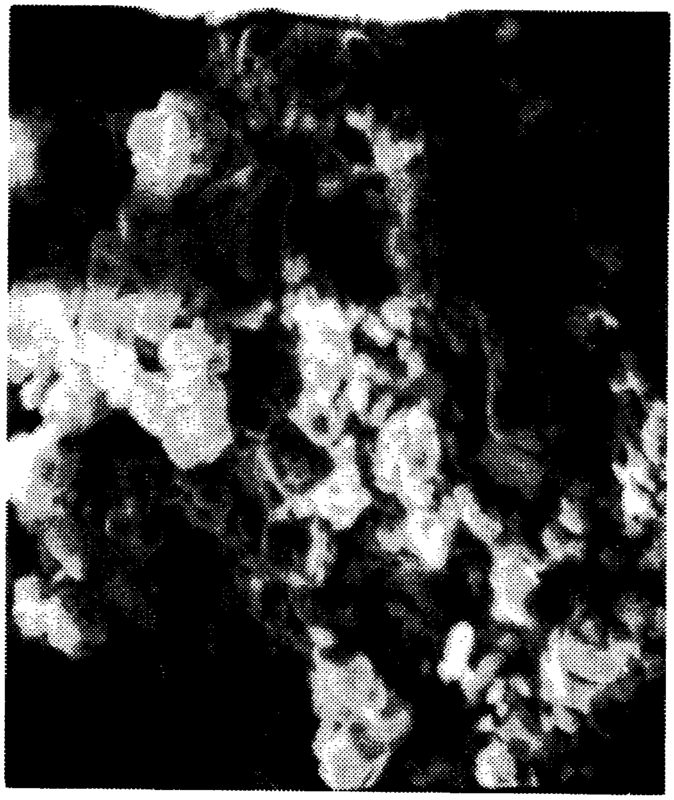

FIG. 4

CLICHÉ $IV_A$

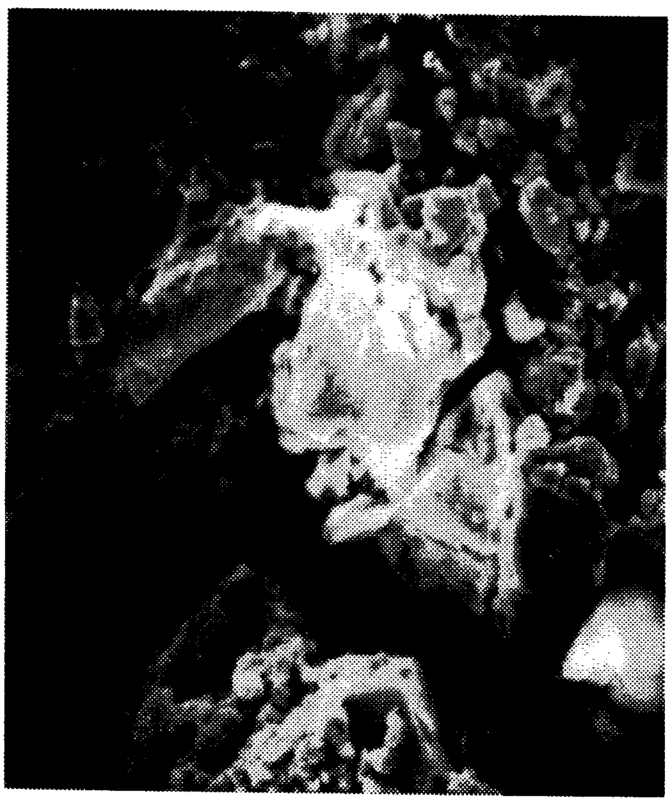

FIG. 5

CLICHÉ $I_A$

0020231

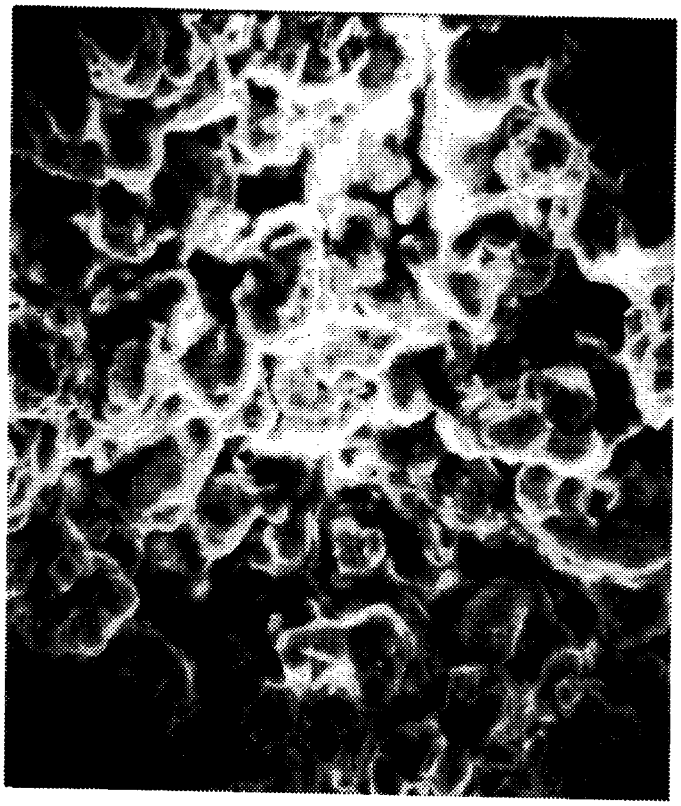

FIG. 6

CLICHÉ $III_A$

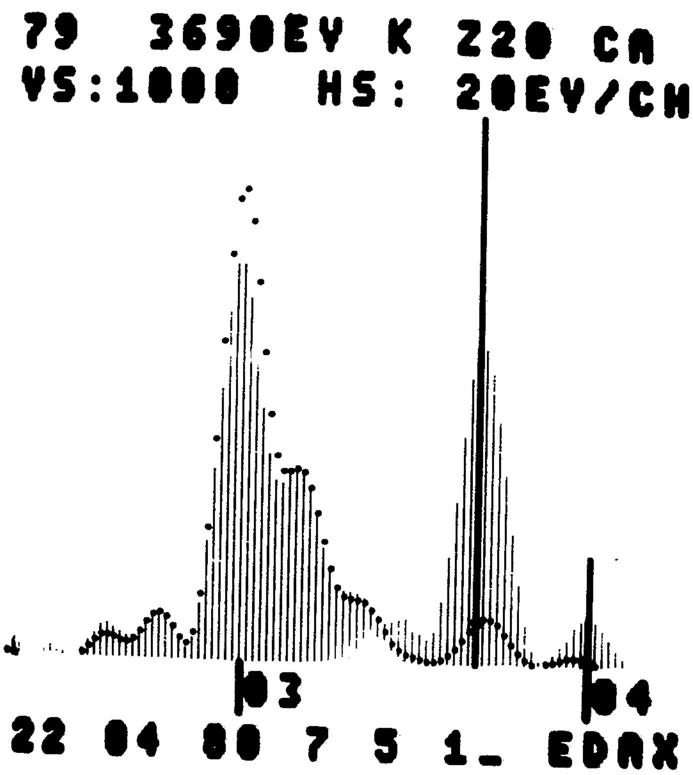


FIG. 9

CLICHÉ $I_{B1}$
.....= 5KV
|||||= 7KV

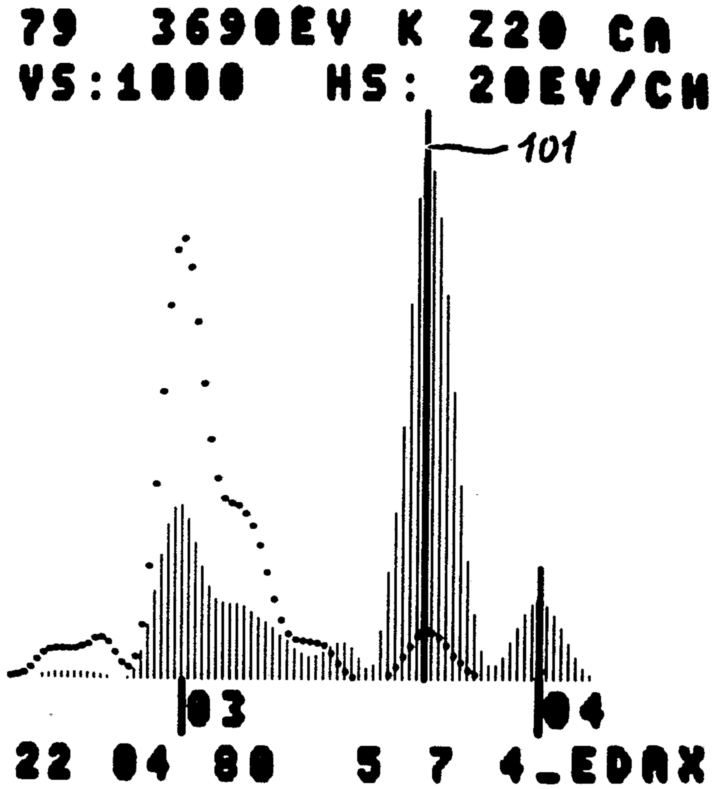


FIG. 7

CLICHÉ $IV_{B1}$
·····= 5KV
|||||= 7KV

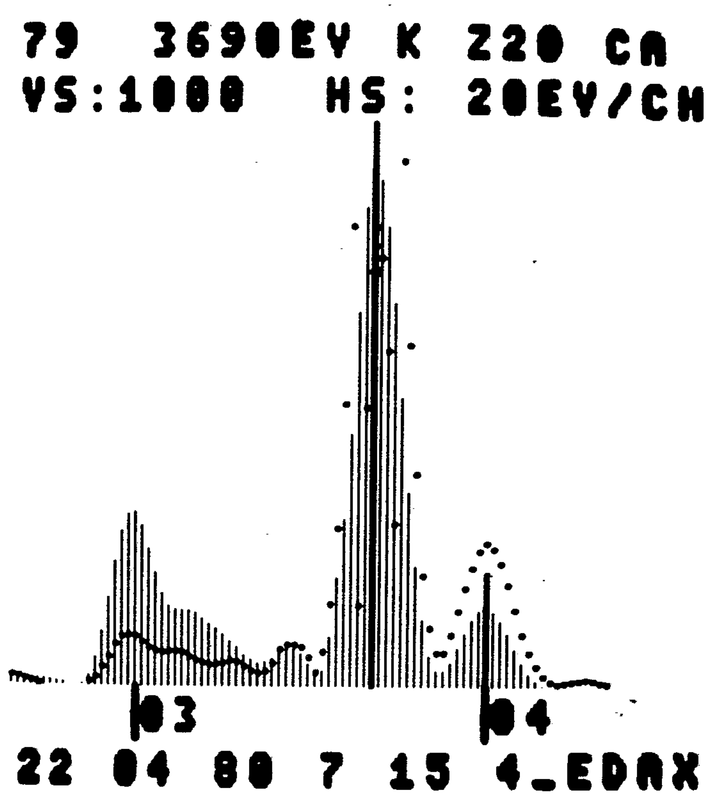


FIG. 8

CLICHÉ $IV_{B2}$
·····= 15KV
|||||= 7KV

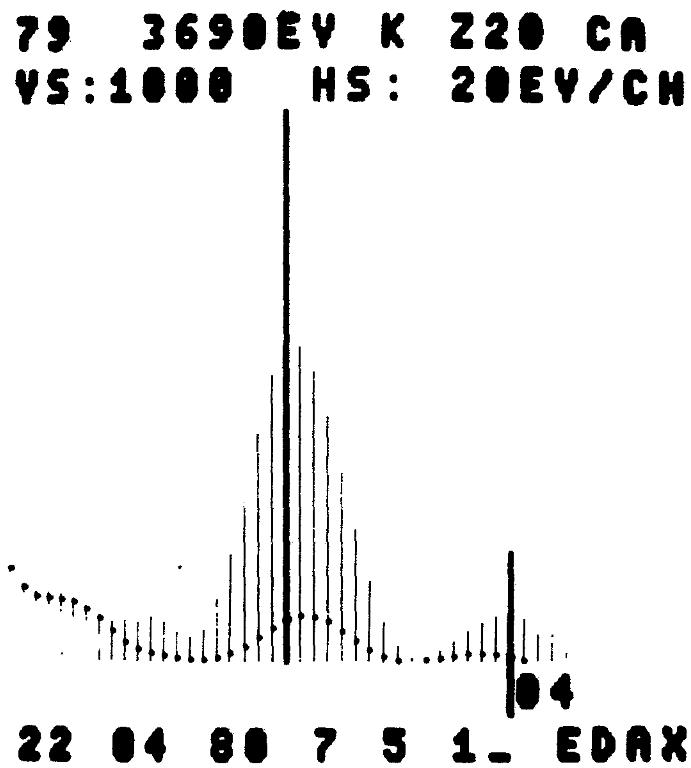


FIG. 10

CLICHÉ $I_{C1}$
······= 5KV
|||||= 7KV

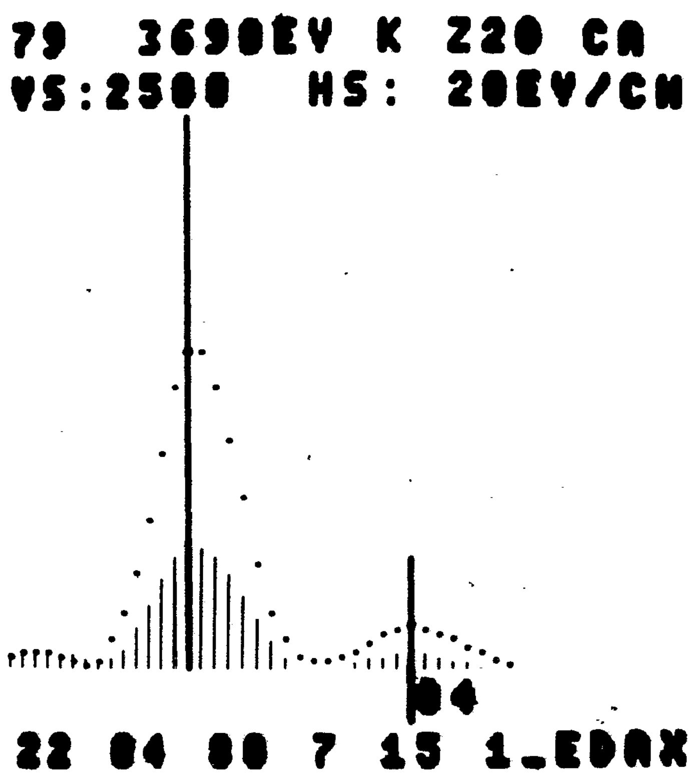


FIG. 11

CLICHÉ $I_{C2}$
······= 15KV
|||||= 7KV

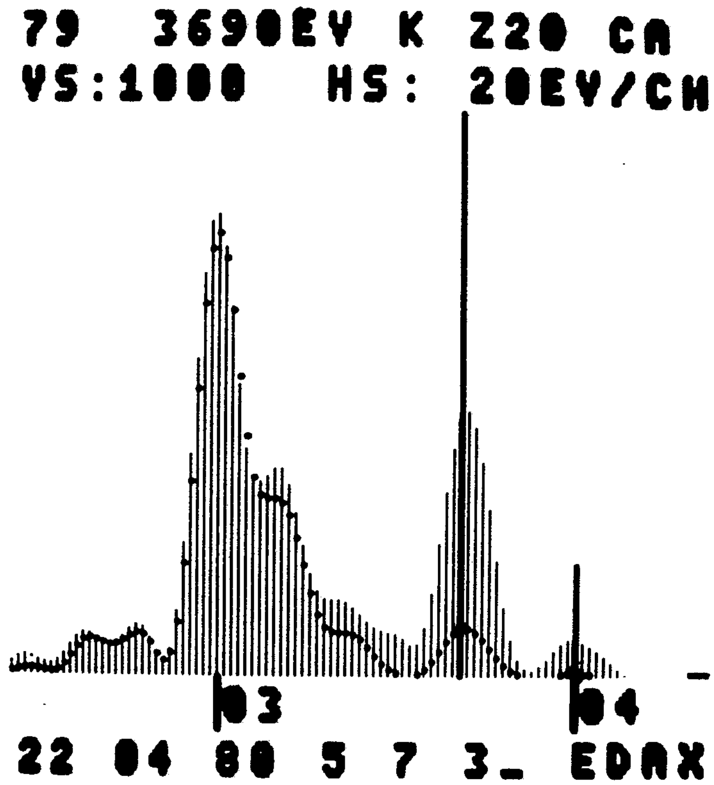


FIG. 12

CLICHÉ $III_{B1}$
······= 5KV
||||||= 7KV

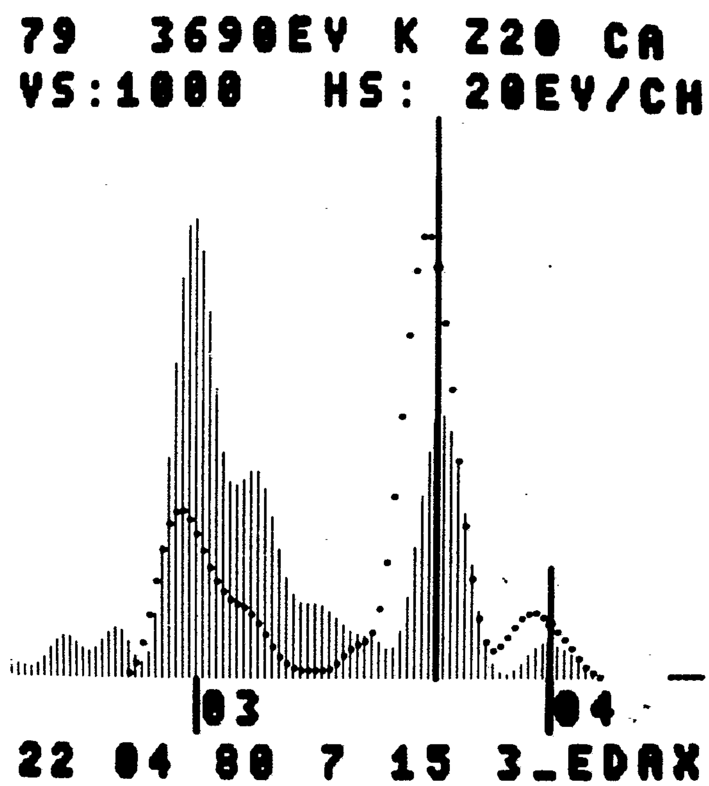


FIG. 13

CLICHÉ $III_{B2}$
······= 15KV
||||||= 7KV

*Fig:14*

```
* INT    MEM: ACA15/IV
ELEM LINE
 AG    LA     680.
 CA    KA   11844.

*
```

```
*
* INT    MEM: A CA 7 /IV
ELEM LINE
 AG    LA    2273.
 CA    KA    6427.

*
```

```
*
J
* INT    MEM: A CA /5 /IV
ELEM LINE
 AG    LA    5478.
 CA    KA     542.
```

TABLEAU IVD

Fig: 15

```
*
*
* INT    MEM: B   CA 15/I
ELEM LINE
 AG    LA    2612.
 CA    KA    9925.


* INT    MEM: C   CA  7/I
ELEM LINE
 AG    LA    5250.
 CA    KA    4196.


* INT    MEM: C  CA 5/I
ELEM LINE
 AG    LA    6171.
 CA    KA     566.
```

TABLEAU $I_D$

*Fig:16*

```
*
* INT   MEM: D CA /15/III
ELEM LINE
 AG    LA    2389.
 CA    KA    5617.
```

```
*
* INT   MEM: C CA 7/III
ELEM LINE
 AG    LA    5877.
 CA    KA    3396.
```

```
*
* INT   MEM: B  CA/5/III
ELEM LINE
 AG    LA    5577.
 CA    KA     596.
```

*TABLEAU III$_D$*

Fig:17

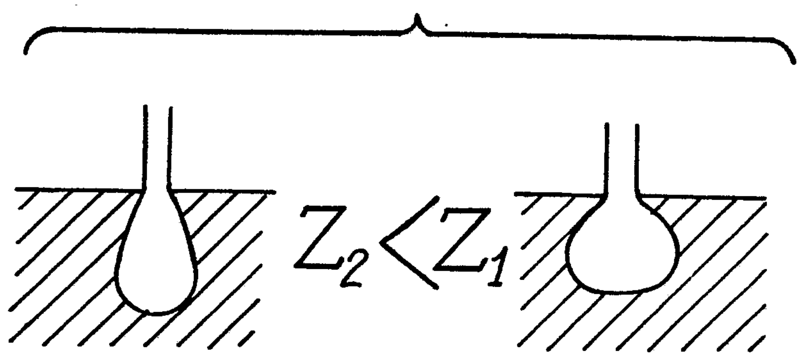


Fig:18

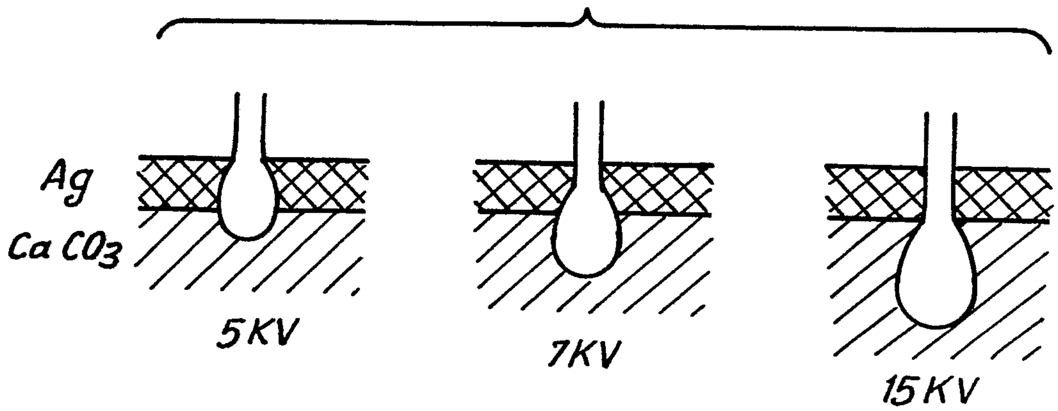


Fig:19

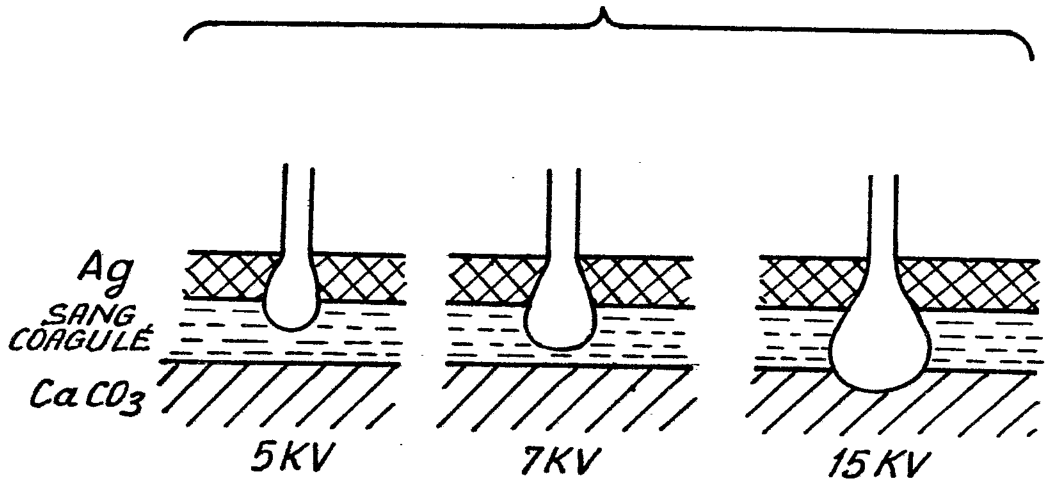

Office européen des brevets

**RAPPORT DE RECHERCHE EUROPEENNE**

0020231

Numéro de la demande
EP 80 40 0686

| Catégorie | DOCUMENTS CONSIDERES COMME PERTINENTS<br>Citation du document avec indication, en cas de besoin, des parties pertinentes | Revendication concernée | CLASSEMENT DE LA DEMANDE (Int. Cl. 3) |
|---|---|---|---|
| | FR - A - 2 400 328 (EFFEM FOODS)<br>* Page 9, lignes 2-10, 22-36; page 10, lignes 1-8; page 6, lignes 6-37 *<br>-- | 1,2, 13,16 | C 05 F 1/00 |
| | FR - A - 1 382 451 (AKTIEBOLAGET SEPARATOR)<br>* Page 2, colonne de gauche, lignes 13-58; colonne de droite, lignes 1-16; page 2, colonne de droite, résumé 1° *<br>-- | 1 | |
| | GB - A - 1 153 135 (PETFOODS LTD.)<br>* Page 2, lignes 103-107; 115-117; page 3, lignes 13-15 *<br>-- | 1,13, 20 | DOMAINES TECHNIQUES RECHERCHES (Int. Cl. 3)<br>C 05 F 1/00<br>C 05 F 13/00<br>A 23 K 1/04 |
| | DE - C - 128 317 (RICHTER)<br>* Page 2, revendication; colonne de gauche, dernier paragraphe *<br>-- | 1,13, 15,16 | |
| A | FR - A - 350 637 (MARIS) | | CATEGORIE DES DOCUMENTS CITES<br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| A | GB - A - 938 583 (AMERICAN-MARIETTA COMP.) | | |
| A | GB - A - 1 483 150 (AN FORAS TALUNTAIS) | | |
| A | FR - A - 535 371 (DUMONT)<br>---- | | |
| ✗ | Le présent rapport de recherche a été établi pour toutes les revendications | | &: membre de la même famille, document correspondant |

| Lieu de la recherche | Date d'achèvement de la recherche | Examinateur |
|---|---|---|
| La Haye | 12-08-1980 | STEELANDT |